# EUROPEAN PATENT APPLICATION

(11) **EP 4 671 815 A1**
(43) Date of publication of application: **31.12.2025**
(21) Application number: 23924143.3
(22) Date of filing: 13.09.2023
(51) Int. Cl.: G01S 7/481, G02B 7/00

(54) **OPTICAL SENSOR, AND MANUFACTURING METHOD**

(30) Priority: 22.02.2023 JP 2023026476; 07.09.2023 JP 2023145606
(71) Applicant: DENSO CORPORATION, Kariya-city, Aichi 448-8661 (JP)
(72) Inventor: AOKI Keishin, Kariya- city Aichi 4488661 (JP); KANO Hiroshi, Kariya- city Aichi 4488661 (JP); SHOGAKI Yoshiro, Kariya- city Aichi 4488661 (JP)
(74) Representative: Kuhnen & Wacker Patent- und Rechtsanwaltsbüro PartG mbB
(86) International application number: PCT/JP2023/033287
(87) International publication number: WO 2024/176498

(57) **Abstract**

An optical sensor (10) includes: a sensor base (14) that forms a surface (141), which is parallel to a Y-Z plane, and a surface (142), which is parallel to an X-Z plane; a receiver unit (41) that is configured to receive a reflection beam (Br) along a received light optical axis (Or), an orientation of which is adjusted in a three-dimensional coordinate system; a plurality of primary shims (15) that are respectively positioned at three distinct locations to position the receiver unit (41) relative to the sensor base (14) around a Y-axis and also around a Z-axis; and a plurality of secondary shims (16) that are respectively positioned at two distinct locations to position the receiver unit (41) relative to the sensor base (14) around an X-axis. Each primary shim (15) has a thickness set based on an orientation angle (θ) of the received light optical axis (Or) and is screw-fastened between a contact surface of the receiver unit (41) and the surface (141) in a state where a corner portion of the primary shim is in contact. Each secondary shim (16) has a thickness set based on the orientation angle (θ) and is screw-fastened between a surface (452) perpendicular to a surface (451) of the receiver unit (41) and the surface (142) in a state where a corner portion (160) of the secondary shims (16) is in contact with the surface (142).

## Description

### CROSS REFERENCE TO RELATED APPLICATION

This application is based on and incorporates herein by reference Japanese Patent Application No. 2023-26476 filed on February 22, 2023 and Japanese Patent Application No. 2023-145606 filed on September 7, 2023.

### TECHNICAL FIELD

The present disclosure relates to an optical sensor and a manufacturing method thereof.

### BACKGROUND ART

Previously, there has been proposed an optical sensor that is configured to detect an external environment by projecting a projection beam toward the external environment and receiving a reflection beam which is reflected from the external environment in response to the projection beam. In the optical sensor of this type disclosed in the patent literature 1, a lens module guides the projection beam from a light source module, which generates the projection beam, toward the external environment, and an orientation of an optical axis of the lens module is adjusted relative to the light source module.

### CITATION LIST

### PATENT LITERATURE

PATENT LITERATURE 1: JP2017-3938A

### SUMMARY OF INVENTION

However, in the apparatus disclosed in the patent literature 1, it is still necessary to adjust an orientation of an optical axis of a receiver unit, which receives the reflection beam corresponding to the projection beam, relative to a projector unit that includes the light source module and the lens module. In this optical axis adjustment of the receiver unit, although an adjustment method in three axial directions as disclosed in the patent literature 1 can be applied, the adjustment, which is substantially limited to those three directions, results in a limitation in adjustment accuracy due to manufacturing tolerances.

Accordingly, it is an objective of the present disclosure to provide an optical sensor and a manufacturing method thereof which can ensure accuracy of optical axis adjustment.

Hereinafter, technical measures of the present disclosure for addressing the aforementioned objective will be described.

According to a first aspect of the present disclosure, there is provided an optical sensor that is configured to detect an external environment by projecting a projection beam toward the external environment and receiving a reflection beam which is reflected from the external environment in response to the projection beam, wherein a three-dimensional coordinate system with an X-axis, a Y-axis and a Z-axis is defined in the optical sensor, the optical sensor including:
a sensor base that forms a first base surface, which is parallel to a Y-Z plane of the three-dimensional coordinate system, and a second base surface, which is parallel to an X-Z plane of the three-dimensional coordinate system;
a receiver unit that is fixed to the sensor base and is configured to receive the reflection beam along a received light optical axis, an orientation of which is adjusted in the three-dimensional coordinate system;
a plurality of primary shims that are respectively positioned at three distinct locations which are set to position the receiver unit relative to the sensor base around the Y-axis and also around the Z-axis; and
a plurality of secondary shims that are respectively positioned at two distinct locations which are set to position the receiver unit relative to the sensor base around the X-axis, wherein:
   each of the plurality of primary shims has a thickness individually set based on an adjusted orientation angle of the received light optical axis in the three-dimensional coordinate system and is thereby screw-fastened between a first contact surface of the receiver unit and the first base surface in a state where a corner portion of each of the plurality of primary shims is in contact with one of the first contact surface and the first base surface; and
   each of the plurality of secondary shims has a thickness individually set based on the adjusted orientation angle of the received light optical axis in the three-dimensional coordinate system and is thereby screw-fastened between a second contact surface of the receiver unit and the second base surface in a state where a corner portion of each of the plurality of secondary shims is in contact with one of the second contact surface and the second base surface, wherein the second contact surface is perpendicular to the first contact surface.

According to a second aspect of the present disclosure, there is provided a manufacturing method for manufacturing the optical sensor of the first aspect, the manufacturing method including:
interposing each of the plurality of primary shims between the first base surface and the first contact surface, and each of the plurality of secondary shims between the second base surface and the second contact surface, wherein the thickness of each of the plurality of primary shims and the thickness of each of the plurality of secondary shims are set based on the adjusted orientation angle in the three-dimensional coordinate system; and
screw-fastening each of the plurality of primary shims between the first base surface and the first contact surface, and thereafter screw-fastening each of the plurality of secondary shims between the second base surface and the second contact surface.

According to the first and second aspects, each of the plurality of primary shims, which are respectively positioned at the three locations, has the thickness individually set based on the adjusted orientation angle of the received light optical axis in the three-dimensional coordinate system and is thereby screw-fastened between the first contact surface of the receiver unit and the first base surface being parallel to the Y-Z plane at the sensor base in a state where the corner portion of each of the plurality of primary shims is in contact with the one of the first contact surface and the first base surface. Thus, the positioning state of the receiver unit relative to the sensor base around the Y-axis and also around the Z-axis can be uniquely defined in the three-point support state in accordance with the adjusted orientation angle of the received light optical axis.

In addition, according to the first and second aspects, each of the plurality of secondary shims, which are respectively positioned at the two distinct locations, has the thickness individually set based on the adjusted orientation angle of the received light optical axis in the three-dimensional coordinate system and is thereby screw-fastened between the second base surface, which is parallel to the X-Z plane at the sensor base, and the second contact surface of the receiver unit, while the second contact surface is perpendicular to the first contact surface, in the state where the corner portion of each of the plurality of secondary shims is in contact with the one of the second contact surface and the second base surface. Thus, the positioning state of the receiver unit relative to the sensor base around the X-axis can be uniquely defined in the two-point support state in accordance with the adjusted orientation angle of the received light optical axis, while suppressing interference with the above-mentioned three-point support.

According to the first and second aspects described above, the orientation of the received light optical axis of the receiver unit can be adjusted around each of the X, Y, and Z axes in the three-dimensional coordinate system of the sensor base. Therefore, it becomes possible to ensure the accuracy of optical axis adjustment.

In addition, according to the second aspect, after the plurality of primary shims are screw-fastened at the three distinct locations, respectively, which are set to position the receiver unit in the three-point support state relative to the sensor base, the plurality of secondary shims are screw-fastened at the two distinct locations, respectively, which are set to position the receiver unit in the two-point support state relative to the sensor base. Accordingly, it is possible to achieve the two-point support state while avoiding interference with the uniquely defined three-point support state, thereby enhancing the accuracy of optical axis adjustment.

According to a third aspect of the present disclosure, there is provided an optical sensor that is configured to detect an external environment by projecting a projection beam toward the external environment and receiving a reflection beam which is reflected from the external environment in response to the projection beam, wherein a three-dimensional coordinate system with an X-axis, a Y-axis and a Z-axis is defined in the optical sensor, the optical sensor including:
a sensor base that forms a first base surface, which is parallel to a Y-Z plane of the three-dimensional coordinate system, and a second base surface, which is parallel to an X-Z plane of the three-dimensional coordinate system;
a projector unit that is fixed to the sensor base and is configured to guide the projection beam along a projected light optical axis;
a plurality of primary shims that are respectively positioned at three distinct locations which are set to position the projector unit relative to the sensor base around the Y-axis and also around the Z-axis; and
a plurality of secondary shims that are respectively positioned at two distinct locations which are set to position the projector unit relative to the sensor base around the X-axis, wherein:
   each of the plurality of primary shims has a thickness individually set based on an adjusted orientation angle of the projected light optical axis in the three-dimensional coordinate system and is thereby screw-fastened between a first contact surface of the projector unit and the first base surface in a state where a corner portion of each of the plurality of primary shims is in contact with one of the first contact surface and the first base surface; and
   each of the plurality of secondary shims has a thickness individually set based on the adjusted orientation angle of the projected light optical axis in the three-dimensional coordinate system and is thereby screw-fastened between a second contact surface of the projector unit and the second base surface in a state where a corner portion of each of the plurality of secondary shims is in contact with one of the second contact surface and the second base surface, wherein the second contact surface is perpendicular to the first contact surface.

According to a fourth aspect of the present disclosure, there is provided a manufacturing method for manufacturing the optical sensor of the third aspect, the manufacturing method including:
interposing each of the plurality of primary shims between the first base surface and the first contact surface, and each of the plurality of secondary shims between the second base surface and the second contact surface, wherein the thickness of each of the plurality of primary shims and the thickness of each of the plurality of secondary shims are set based on the adjusted orientation angle in the three-dimensional coordinate system; and
screw-fastening each of the plurality of primary shims between the first base surface and the first contact surface, and thereafter screw-fastening each of the plurality of secondary shims between the second base surface and the second contact surface.

According to the third and fourth aspects, each of the plurality of primary shims, which are respectively positioned at the three locations, has the thickness individually set based on the adjusted orientation angle of the projected light optical axis in the three-dimensional coordinate system and is thereby screw-fastened between the first contact surface of the projector unit and the first base surface, which is parallel to the Y-Z plane at the sensor base, in the state where the corner portion of each of the plurality of primary shims is in contact with the one of the first contact surface and the first base surface. Thus, the positioning state of the projector unit relative to the sensor base around the Y-axis and also around the Z-axis can be uniquely defined in the three-point support state in accordance with the adjusted orientation angle of the projected light optical axis.

In addition, according to the third and fourth aspects, each of the plurality of secondary shims, which are respectively positioned at the two distinct locations, has the thickness individually set based on the adjusted orientation angle of the projected light optical axis in the three-dimensional coordinate system and is thereby screw-fastened between the second base surface, which is parallel to the X-Z plane at the sensor base, and the second contact surface of the projector unit, while the second contact surface is perpendicular to the first contact surface, in the state where the corner portion of each of the plurality of secondary shims is in contact with the one of the second contact surface and the second base surface. Thus, the positioning state of the projector unit relative to the sensor base around the X-axis can be uniquely defined in the two-point support state in accordance with the adjusted orientation angle of the projected light optical axis, while suppressing interference with the above-mentioned three-point support.

According to the third and fourth aspects described above, the orientation of the projected light optical axis of the projector unit can be adjusted around each of the X, Y, and Z axes in the three-dimensional coordinate system of the sensor base. Therefore, it becomes possible to ensure the accuracy of optical axis adjustment.

In addition, according to the fourth aspect, after the plurality of primary shims are screw-fastened at the three distinct locations, respectively, which are set to position the projector unit in the three-point support state relative to the sensor base, the plurality of secondary shims are screw-fastened at the two distinct locations, respectively, which are set to position the projector unit in the two-point support state relative to the sensor base. Accordingly, it is possible to achieve the two-point support state while avoiding interference with the uniquely defined three-point support state, thereby enhancing the accuracy of optical axis adjustment.

### BRIEF DESCRIPTION OF DRAWINGS

FIG. 1 is a cross-sectional view showing an overall structure of an optical sensor according to a first embodiment.
FIG. 2 is a perspective view showing a projector unit according to the first embodiment.
FIG. 3 is an X-Y plan view schematically showing the projector unit according to the first embodiment.
FIG. 4 is a perspective view showing a receiver unit according to the first embodiment.
FIG. 5 is an X-Y plan view schematically showing the receiver unit according to the first embodiment.
FIG. 6 is a Y-Z plan view schematically showing a structure of the projector unit and a structure of the receiver unit according to the first embodiment.
FIG. 7 is an X-Z plan view schematically showing the structure of the projector unit according to the first embodiment.
FIG. 8 is an X-Z plan view schematically showing the structure of the receiver unit according to the first embodiment.
FIG. 9 is an X-Y plan view showing the structure of the projector unit and the structure of the receiver unit according to the first embodiment.
FIG. 10 is a Y-Z cross-sectional view schematically showing the structure of the receiver unit according to the first embodiment.
FIG. 11 is an X-Z cross-sectional view schematically showing the structure of the receiver unit according to the first embodiment.
FIG. 12 is an X-Y cross-sectional view showing the structure of the receiver unit according to the first embodiment.
FIG. 13 is a Y-Z plan view showing a structure of a projector unit and a structure of a receiver unit according to a modification of FIG. 6.
FIG. 14 is a Y-Z plan view showing a structure of a projector unit and a structure of a receiver unit according to a modification of FIG. 6.
FIG. 15 is a flowchart showing a manufacturing method of the optical sensor according to the first embodiment.
FIG. 16 is a Y-Z cross-sectional view schematically showing a structure of a receiver unit according to a second embodiment.
FIG. 17 is an X-Z cross-sectional view schematically showing the structure of the receiver unit according to the second embodiment.
FIG. 18 is an X-Y cross-sectional view showing the structure of the receiver unit according to the second embodiment.
FIG. 19 is a flowchart showing a manufacturing method of an optical sensor according to a third embodiment.
FIG. 20 is a Y-Z plan view for schematically explaining a projector-side sequence in a preparing subroutine of the manufacturing method according to the third embodiment.
FIG. 21 is a Y-Z plan view for schematically explaining the projector-side sequence in the preparing subroutine of the manufacturing method according to the third embodiment.
FIG. 22 is a Y-Z plan view for schematically explaining a receiver-side sequence in the preparing subroutine of the manufacturing method according to the third embodiment.
FIG. 23 is a Y-Z plan view for schematically explaining the receiver-side sequence in the preparing subroutine of the manufacturing method according to the third embodiment.
FIG. 24 is a Y-Z plan view schematically showing a structure of a projector unit and a structure of a receiver unit according to a fourth embodiment.
FIG. 25 is a flowchart showing a manufacturing method of the optical sensor according to the fourth embodiment.
FIG. 26 is a Y-Z plan view schematically showing a structure of a projector unit and a structure of a receiver unit according to a fifth embodiment.
FIG. 27 is a flowchart showing a manufacturing method of an optical sensor according to the fifth embodiment.
FIG. 28 is an X-Z plan view schematically showing a structure of a receiver unit according to a modification of FIG. 8.
FIG. 29 is an X-Y plan view showing a structure of a projector unit and a structure of a receiver unit according to a modification of FIG. 9.
FIG. 30 is an X-Z plan view schematically showing a structure of a receiver unit according to a modification of FIG. 8.
FIG. 31 is an X-Y plan view showing a structure of a projector unit and a structure of a receiver unit according to a modification of FIG. 9.
FIG. 32 is a Y-Z plan view schematically showing a structure of a projector unit and a structure of a receiver unit according to a modification of FIG. 6.
FIG. 33 is a Y-Z plan view schematically showing a structure of a projector unit and a structure of a receiver unit according to a modification of FIG. 6.
FIG. 34 is a Y-Z plan view schematically showing a structure of a projector unit and a structure of a receiver unit according to a modification of FIG. 24.
FIG. 35 is a Y-Z plan view schematically showing a structure of a projector unit and a structure of a receiver unit according to a modification of FIG. 26.

### DESCRIPTION OF EMBODIMENTS

### (First Embodiment)

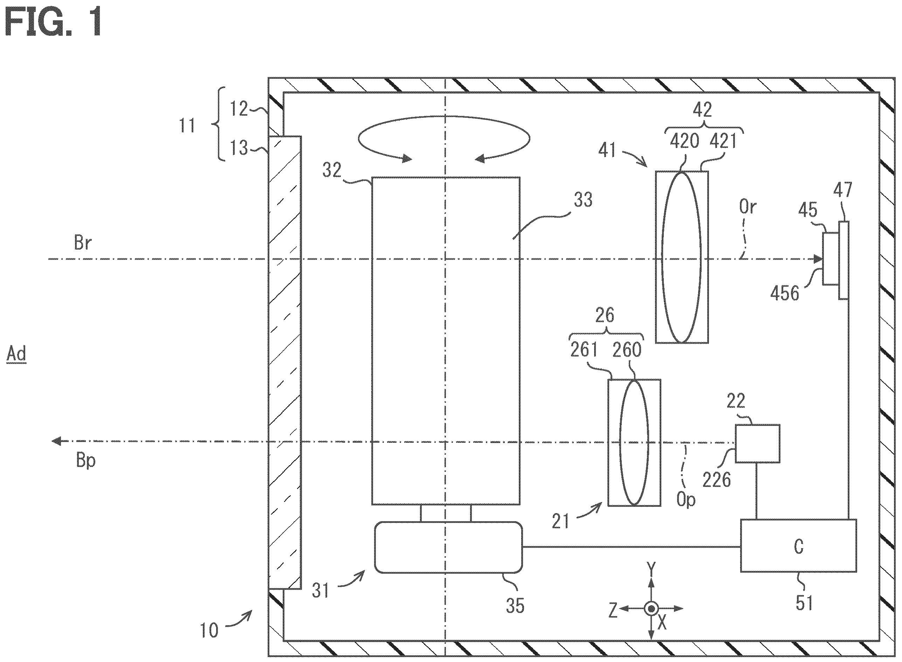

As shown in FIG. 1, an optical sensor 10 according to the first embodiment of the present disclosure is a LIDAR (Light Detection and Ranging/Laser Imaging Detection and Ranging) device, configured to be installed on a moving object to optically detect an external environment. The moving object, on which the optical sensor 10 is to be installed, is a vehicle, such as an automobile, capable of at least one type of operation among a manual driving operation, an autonomous driving operation and a remote driving operation. In the following description, unless otherwise specified, the directions of front, rear, up, down, left and right are defined based on the vehicle on a horizontal plane. In the following description, a horizontal direction and a vertical direction respectively refer to a direction parallel to and a direction perpendicular to the horizontal plane, on which the vehicle is placed.

The optical sensor 10 is installed in at least one location on the vehicle, such as a front portion, a left portion, a right portion, a rear portion and/or an upper roof. The optical sensor 10 projects a projection beam Bp toward a detection area Ad of the external environment, which corresponds to a location of the optical sensor 10 on the vehicle. The optical sensor 10 detects a return light which is a light reflected by a target in the detection area Ad of the external environment after the projection beam Bp is projected onto the target, and this return light is referred to as a reflection beam Br. A light in the near-infrared range, which is difficult for humans to perceive, is selected as the projection beam Bp, which becomes the reflection beam Br.

The optical sensor 10 detects the target present in the detection area Ad of the external environment by receiving the reflection beam Br reflected in response to the projection beam Bp. The detection of the target of the external environment refers to identifying at least one or more types of information, including but not limited to a distance from the optical sensor 10 to the target, a direction in which the target is located, and a reflection intensity of the reflection beam Br from the target, and at least the distance should be included in the at least one or more types of information described above. A representative target(s), which serves as a detection subject(s), for the optical sensor 10 applied to the vehicle may include at least one type of moving object, such as a pedestrian(s), a cyclist(s), a non-human animal(s), or the other vehicle(s). Additionally or alternatively, the representative target(s), which serves as the detection subject(s), for the optical sensor 10 applied to the vehicle may include at least one type of stationary object, such as a guardrail(s), a road sign(s), a roadside structure(s), or an object(s) fallen on the road.

In the optical sensor 10, a three-dimensional coordinate system is defined using three mutually orthogonal axes, i.e., an X-axis, a Y-axis and a Z-axis. In particular, in the three-dimensional coordinate system of the optical sensor 10, an axial direction of the Y-axis is defined along the vertical direction of the vehicle, and an axial direction of the X-axis and an axial direction of the Z-axis are defined along two different horizontal directions, respectively, of the vehicle. As a result, at the vehicle on the horizontal plane, an X-Y plane and a Y-Z plane of the three-dimensional coordinate system align with two vertical planes, respectively, perpendicular to the horizontal plane, and an X-Z plane aligns with the horizontal plane. In FIG. 1, a left-side portion, which is located on the left side of a dot-dash line parallel to the axial direction of the Y-axis (i.e., on the side where an optical window 13 described later is located), actually illustrates a cross-section that is perpendicular to a right-side portion, which is located on the right side of the dot-dash line in the axial direction of the Y-axis (i.e., on the side where units 21, 41 described later are located).

The optical sensor 10 includes a housing unit 11, a projector unit 21, a scanning unit 31, a receiver unit 41 and a control unit 51. The housing unit 11, which partitions between the external environment and the inside of the housing unit 11, includes a housing main body 12 and the optical window 13. The housing main body 12, which has light-blocking properties, is shaped in a box form and is made of, for example, metal or resin. The housing main body 12 receives the projector unit 21, the scanning unit 31, the receiver unit 41 and the control unit 51. The housing unit 11 has an opening that is closed by the optical window 13. The optical window 13, which has translucent properties, is shaped in a plate form and is made of, for example, resin or glass.

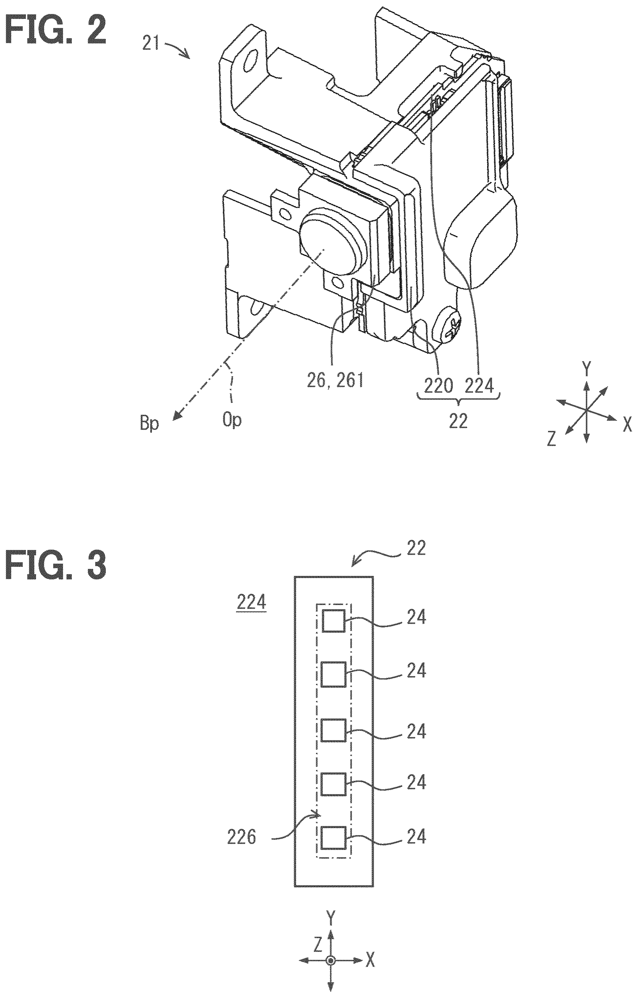

As shown in FIGS. 1 and 2, the projector unit 21 includes a projector light source module 22 and a projector lens module 26. As shown in FIG. 3, the projector light source module 22 includes a plurality of projector light sources 24 which form an array on a circuit board 224. In particular, in the present embodiment, each projector light source 24 is a laser diode, and these laser diodes are arranged in a single row in the axial direction of the Y-axis. Each projector light source 24 generates pulsed laser light, which forms part of the projection beam Bp, based on a control signal transmitted from the control unit 51. Each projector light source 24 may be an edge-emitting laser or a vertical cavity surface emitting laser (VCSEL).

As shown in FIGS. 1 and 3, the projector light source module 22 forms a light emission surface 226 on one side of the circuit board 224 to project the projection beam Bp, which is generated by light emission of each projector light source 24, through the light emission surface 226. The light emission surface 226 is pseudo-defined by an assembly of laser oscillators of the projector light sources 24 such that the light emission surface 226 forms a rectangular outline that is elongated in the axial direction of the Y-axis and shortened in the axial direction of the X-axis. The laser lights emitted from the laser oscillators of the projector light sources 24 are projected through the light emission surface 226 as the projection beam Bp, which is shaped into a vertically elongated line at the detection area Ad.

As shown in FIGS. 1 and 2, the projector lens module 26 has a structure in which at least one projector lens 260 is held by a lens barrel 261. The projector lens 260, which has translucent properties, is primarily made of a base material, such as resin or glass, and the projector lens 260 is formed into a lens shape according to an optical function it is designed to perform. The projector lens 260 performs at least one optical function, such as focusing, collimating, or shaping the light, on the projection beam Bp projected from the projector light source module 22. The projector lens 260 is positioned within the lens barrel 261, which has light-blocking properties and is made of, for example, metal or resin.

The projector lens module 26, which is configured in the above-described manner, is aligned with the projector light source module 22 to form a projected light optical axis Op. Accordingly, the projection beam Bp, which is projected from the projector light source module 22, is guided toward the external environment of the vehicle along the projected light optical axis Op through the optical function of the projector lens module 26.

As shown in FIG. 1, the scanning unit 31 includes a scanning mirror 32 and a scanning motor 35. The scanning mirror 32 is shaped in a plate form and is formed such that a reflective film is formed by vapor deposition at a reflective surface 33 that is on one side of a base material. The scanning mirror 32 is supported by the housing unit 11 such that the scanning mirror 32 can be driven to rotate around a rotational axis parallel to the axial direction of the Y-axis. The scanning mirror 32 is oscillated within a drive range, which is limited by mechanical or electrical stoppers. The scanning motor 35 is, for example, a voice coil motor, a brushed DC motor, or a stepping motor. An output shaft of the scanning motor 35 is coupled to the scanning mirror 32 either directly or indirectly through a drive mechanism such as a speed reducer. The scanning motor 35 is held by the housing unit 11 such that the scanning motor 35 can drive and rotate the scanning mirror 32 along with its output shaft. The scanning motor 35 rotates (i.e., oscillates) the scanning mirror 32 within the limited drive range based on a control signal transmitted from the control unit 51.

The scanning mirror 32 reflects the projection beam Bp, which is received from the projector unit 21, off the reflective surface 33 and directs it through the optical window 13 toward the detection area Ad, and thereby the scanning mirror 32 scans the detection area Ad according to the rotational angle of the scanning motor 35. At this time, the scanning of the detection area Ad by the projection beam Bp is performed in response to the rotation of the scanning mirror 32 and is substantially limited to horizontal scanning in the present embodiment.

The scanning mirror 32 uses the reflective surface 33 to reflect the reflection beam Br, which is received from the target in the detection area Ad through the optical window 13, toward the receiver unit 41 according to the rotational angle of the scanning motor 35. At this time, a speed of the projection beam Bp and a speed of the reflection beam Br are sufficiently high relative to a rotational speed of the scanning mirror 32. As a result, the scanning mirror 32 guides the reflection beam Br toward the receiver unit 41, traveling opposite to the projection beam Bp. This occurs because the reflection beam Br is reflected by the scanning mirror 32 which can set the rotational angle for the reflection beam Br substantially equal to the rotational angle for the projection beam Bp.

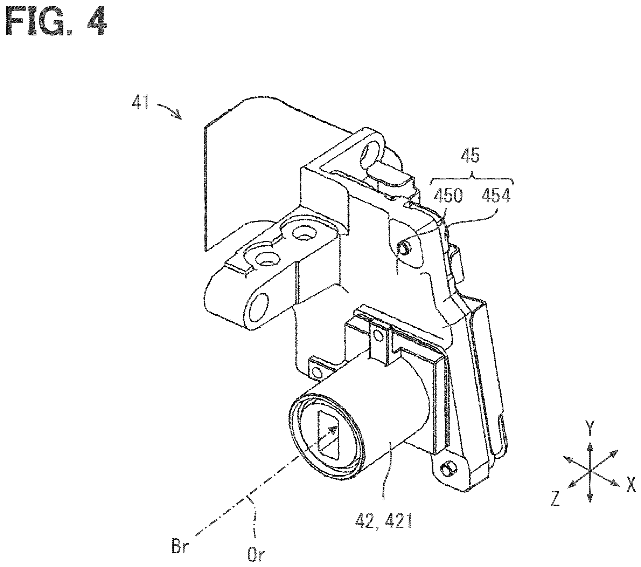

As shown in FIGS. 1 and 4, the receiver unit 41 includes a receiver lens module 42 and a receiver photodetector module 45. The receiver lens module 42 has a structure in which at least one receiver lens 420 is held by a lens barrel 421. The receiver lens 420, which has translucent properties, is primarily made of a base material, such as resin or glass, and the receiver lens 420 is formed into a lens shape according to an optical function it is designed to perform. The receiver lens 420 exerts an optical function such that the receiver lens 420 focuses the reflection beam Br from the scanning mirror 32 onto the receiver photodetector module 45. The receiver lens 420 is positioned within the lens barrel 421, which has light-blocking properties and is made of, for example, metal or resin.

The receiver lens module 42, which is configured in the above-described manner, is aligned with the receiver photodetector module 45 to form a received light optical axis Or. Here, the received light optical axis Or of the receiver lens module 42 is offset in the axial direction of the Y-axis relative to the projected light optical axis Op of the projector lens module 26. As a result, the reflection beam Br, which is reflected from the reflective surface 33 of the scanning mirror 32 and is offset in the axial direction of the Y-axis, is guided along the received light optical axis Or by the optical function of the receiver lens module 42, and thereby the reflection beam Br is focused onto the receiver photodetector module 45.

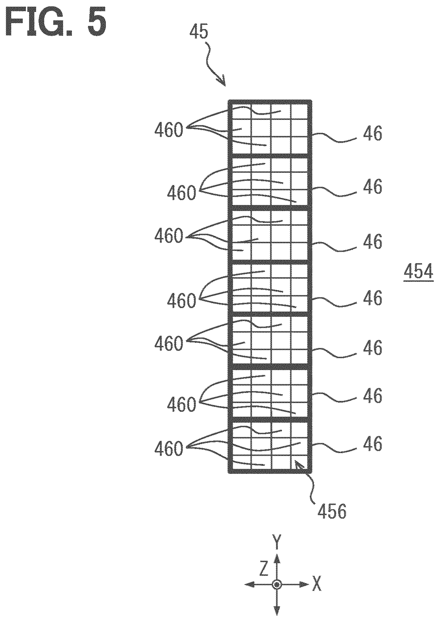

As shown in FIG. 5, the receiver photodetector module 45 includes a plurality of photodetector pixels 46 which form an array on a circuit board 454. The photodetector pixels 46 are arranged at least in the axial direction of the Y-axis. Each photodetector pixel 46 includes a plurality of photodetector elements 460, such as single photon avalanche diodes (SPADs).

As shown in FIGS. 1 and 5, the receiver photodetector module 45 forms a light receiving surface 456 on one side of the circuit board 454. The light receiving surface 456 is defined by an assembly of light incident surfaces of the photodetector pixels 46 such that the light receiving surface 456 forms a rectangular outline that is elongated in the axial direction of the Y-axis and shortened in the axial direction of the X-axis. Each of the photodetector pixels 46 receives the line-shaped reflection beam Br, which is incident from the receiver lens module 42 to the light receiving surface 456 along the received light optical axis Or.

As shown in FIG. 1, the receiver photodetector module 45 includes an output circuit 47. The output circuit 47 performs a sampling process for each control cycle according to a control signal transmitted from the control unit 51 in a detection frame for each scanning line that is synchronized with a projection cycle of the projection beam Bp projected from the projector light source module 22 and corresponds to the rotational angle of the scanning mirror 32. At this time, the output circuit 47 generates a detection signal by synthesizing the response outputs from the photodetector elements 460 of each photodetector pixel 46 for each control cycle. The detection signal, which is generated in this manner, is outputted from the output circuit 47 to the control unit 51 for each scanning line.

The control unit 51 controls the detection of the target(s) for the detection area Ad of the external environment. The control unit 51 includes at least one computer, which has a processor and a memory, as its main component. The control unit 51 is connected to the projector light source module 22, the scanning motor 35 and the receiver photodetector module 45. The control unit 51 controls the projector light source module 22 such that the projector light source module 22 generates the projection beam Bp per every projection cycle. In addition, the control unit 51 controls the scanning motor 35 such that the scanning and the reflection by the scanning mirror 32 are synchronized with the projection cycle of the projection beam PB from the projector light source module 22. Furthermore, the control unit 51 processes the detection signal outputted from the receiver photodetector module 45 in synchronization with the projection cycle of the projector light source module 22 and the scanning and the reflection by the scanning mirror 32, and thereby the control unit 51 generates detection data for the target(s) in the detection area Ad.

### (Detailed Structure)

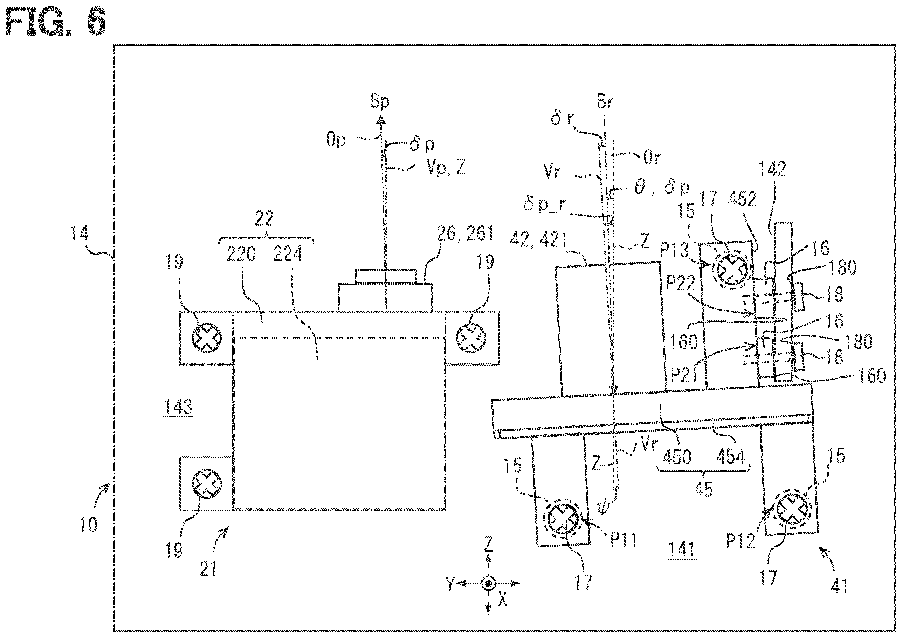

The housing unit 11 further includes a sensor base 14, two types of shims 15, 16 and three types of fixing screws 17, 18, 19 shown in FIGS. 6 to 12.

As shown in FIGS. 6 to 9, the sensor base 14, which has light-blocking properties, is primarily made of a base material such as resin or metal and is formed as a partition wall that divides an inside of the housing main body 12 (see FIG. 1) into two sections. The sensor base 14 is surrounded by the housing main body 12 from its outer peripheral side and is thereby positioned such that one surface of the sensor base 14 is opposed to an inner surface of the optical window 13. Accordingly, the three-dimensional coordinate system, which is defined above, is assumed to be set in the sensor base 14. The sensor base 14 has two types of base surfaces 141, 142, as a structure for fixing the receiver unit 41.

The first base surface 141 is formed on one side of the sensor base 14, which faces the optical window 13. The first base surface 141 is defined as a planar surface parallel to a Y-Z plane. The first base surface 141 may be formed as a continuous surface common to three distinct locations (hereinafter simply referred to as three locations) P11, P12, P13 which are set to position the receiver unit 41 relative to the sensor base 14 around the Y-axis and also around the Z-axis. The first base surface 141 may be formed as a plurality of separate divided surfaces, each of which corresponds to a corresponding one of the three locations P11, P12, P13 that are set to position the receiver unit 41 relative to the sensor base 14 around the Y-axis and also around the Z-axis. FIGS. 6, 8 and 9 show an example of the first base surface 141 which is formed as the continuous surface.

The second base surface 142 is formed on the side surface of a block-shaped projection that projects in the axial direction of the X-axis from the surface of the sensor base 14 which forms the first base surface 141. The second base surface 142 is defined as a planar surface, which is parallel to the X-Z plane and is arranged in a substantially perpendicular positional relationship with the first base surface 141. The second base surface 142 may be formed as a continuous surface common to two distinct locations (hereinafter simply referred to as two locations) P21, P22 which are set to position the receiver unit 41 relative to the sensor base 14 around the X-axis. The second base surface 142 may be formed as a plurality of separate divided surfaces, each of which corresponds to a corresponding one of the two locations P21, P22 that are set to position the receiver unit 41 relative to the sensor base 14 around the X-axis. FIG. 6 shows an example of the second base surface 142 which is formed as the continuous surface.

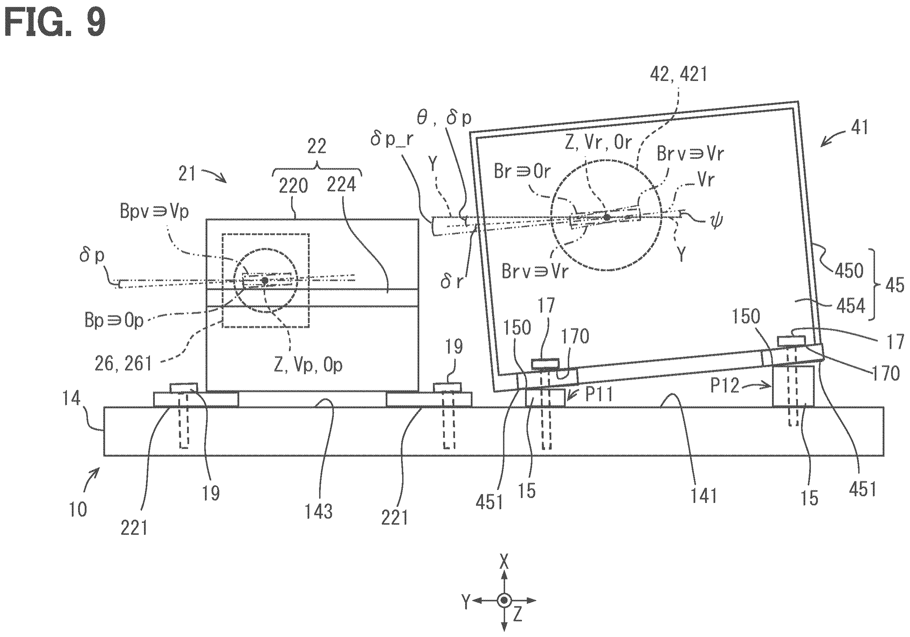

The sensor base 14 has a projector base surface 143, which is separate from the base surfaces 141, 142 for the receiver unit 41 and is formed as a structure for fixing the projector unit 21. The projector base surface 143 is formed on the surface of the sensor base 14, which is on the same side as the first base surface 141. The projector base surface 143 is defined as a planar surface parallel to the Y-Z plane. The projector base surface 143 may be formed as a continuous surface that is continuous with the first base surface 141. The projector base surface 143 may be formed as a separate surface, which is separated from the first base surface 141. FIGS. 6 and 9 show an example of the projector base surface 143 which is formed as the continuous surface.

As shown in FIGS. 2, 6, 7 and 9, the projector light source module 22 of the projector unit 21 includes a projector holder 220 that is arranged next to the lens barrel 261 of the projector lens module 26 in the axial direction of the Z-axis and is bonded to the lens barrel 261 in the axial direction of the Z-axis. The projector holder 220, which has light-blocking properties, is formed in a tubular form and is primarily made of a base material such as resin or metal. The circuit board 224, on which the plurality of projector light sources 24 (see FIG. 3) are mounted, is held at an inside of the projector holder 220.

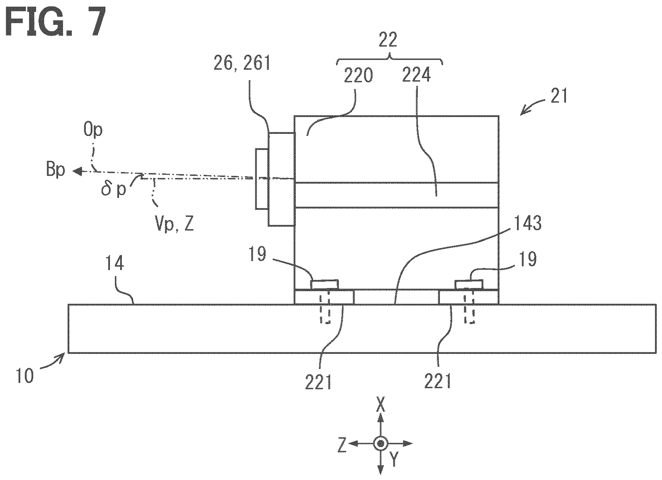

As shown in FIGS. 7 and 9, the projector holder 220 has a projector contact surface(s) 221 as a structure for fixing the projector unit 21 to the sensor base 14. The projector contact surface(s) 221 is defined as a planar surface that comes into surface contact with the projector base surface 143 and is thereby parallel to the Y-Z plane in a state where the projector contact surface 221 is positioned by the projector base surface 143. The projector contact surface(s) 221 may be formed as a continuous surface common to a plurality of distinct locations that are set to position the projector unit 21 relative to the sensor base 14. The projector contact surfaces 221 may be formed as a plurality of separate divided surfaces, each of which corresponds to a corresponding one of the distinct locations that are set to position the projector unit 21 relative to the sensor base 14. FIGS. 7 and 9 show an example of the projector contact surfaces 221 which are formed as the separate divided surfaces.

As shown in FIGS. 6, 7 and 9, the projector holder 220 is screw-fastened to the sensor base 14 by a plurality of projector fixing screws 19 while the projector contact surfaces 221 are in surface contact with the projector base surface 143 of the sensor base 14. Each of the projector fixing screws 19 is shaped, for example, in a male-threaded form and is made of, for example, metal. A shaft portion of each of the projector fixing screws 19 is loosely inserted through a corresponding one of a plurality of through-holes of the projector holder 220 in the axial direction of the X-axis. In addition, the shaft portion of each of the projector fixing screws 19 is securely screwed into a corresponding one of female-threaded holes of the sensor base 14 in the axial direction of the X-axis. With this screw-fastening structure, each of the projector fixing screws 19 fixes the projector unit 21 to the sensor base 14 in a state where an end surface of a head of the projector fixing screw 19 is in surface contact with an opposite surface of the projector holder 220 which is opposite to the sensor base 14.

In the positioned state where the projector holder 220 is positioned by the projector base surface 143, a projected light virtual axis Vp, which is parallel to the axial direction of the Z-axis, is geometrically assumed at the projector holder 220. With this assumption, the projected light virtual axis Vp is defined to be parallel to the projector contact surface 221. In the projector holder 220, an orientation angle tolerance relative to the projected light virtual axis Vp in the three-dimensional coordinate system is assumed for the holding orientation of the circuit board 224 and/or the mounting orientation of each projector light source 24 on the circuit board 224. Similarly, in the lens barrel 261, an orientation angle tolerance relative to the projected light virtual axis Vp in the three-dimensional coordinate system is assumed for the bonding orientation to the projector holder 220 and/or the holding orientation of the projector lens 260.

From these considerations, in the final product of the optical sensor 10, as shown in FIGS. 6, 7 and 9, an orientation angle deviation δp of the projected light optical axis Op relative to the projected light virtual axis Vp in the three-dimensional coordinate system appears in at least one of a Y-Z plan view, an X-Z plan view and an X-Y plan view. Specifically, in the Y-Z plan view of FIG. 6, the orientation angle deviation δp of the projected light optical axis Op relative to the projected light virtual axis Vp appears as an inclination angle of the projected light optical axis Op around the X-axis, with the bonding interface between the lens barrel 261 and the projector holder 220 serving as the center of this inclination. Also, in the X-Z plan view of FIG. 7, the orientation angle deviation δp of the projected light optical axis Op relative to the projected light virtual axis Vp appears as an inclination angle of the projected light optical axis Op around the Y-axis, with the bonding interface between the lens barrel 261 and the projector holder 220 serving as the center of this inclination. Furthermore, in the X-Y plan view of FIG. 9, the orientation angle deviation δp of the projected light optical axis Op relative to the projected light virtual axis Vp appears as a rotational angle of the projection beam Bp around the Z-axis on the projected light optical axis Op, deviating from the ideal projection beam Bpv on the projected light virtual axis Vp at the bonding interface between the lens barrel 261 and the projector holder 220.

As shown in FIGS. 4, 6, 8 and 9, the receiver photodetector module 45 of the receiver unit 41 includes a receiver holder 450 that is arranged next to the lens barrel 421 of the receiver lens module 42 in the axial direction of the Z-axis and is bonded to the lens barrel 421 in the axial direction of the Z-axis. The receiver holder 450, which has light-blocking properties, is formed in a tubular form and is primarily made of a base material such as resin or metal. The circuit board 454, on which the plurality of photodetector pixels 46 (see FIG. 5) are arranged, is held at an inside of the receiver holder 450. The receiver holder 450 has two types of contact surfaces, 451, 452, serving as a structure for fixing the receiver unit 41 to the sensor base 14, as shown in FIGS. 6, 8 and 9 to 12.

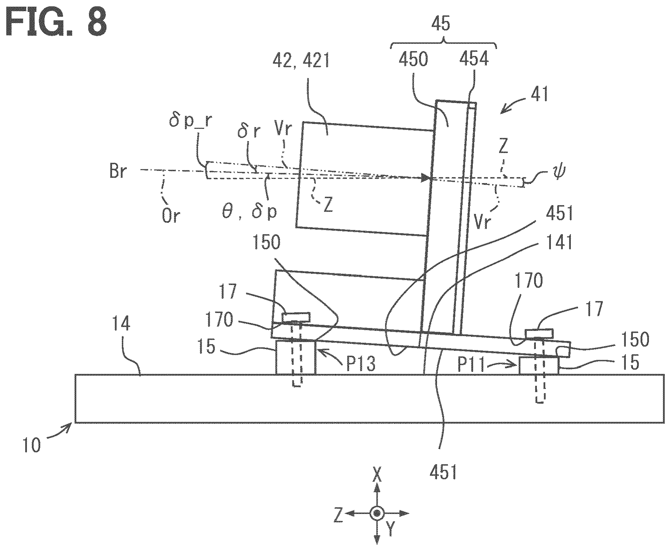

As shown in FIGS. 8, 9, 11 and 12, the first contact surface(s) 451 is defined as a planar surface and clamps each of a plurality of primary shims 15 in the axial direction of the X-axis between the first contact surface(s) 451 and the first base surface 141. The first contact surface(s) 451 may be formed as a continuous surface common to the three locations P11, P12, P13 which are set to position the receiver unit 41 relative to the sensor base 14 around the Y-axis and also around the Z-axis. The first contact surface(s) 451 may be formed as a plurality of separate divided surfaces, each of which corresponds to a corresponding one of the three locations P11, P12, P13 that are set to position the receiver unit 41 relative to the sensor base 14 around the Y-axis and also around the Z-axis. FIGS. 8 and 9 show an example of the first contact surfaces 451 which are formed as the separate divided surfaces.

As shown in FIGS. 8, 9, 11 and 12, the plurality of primary shims 15 are respectively interposed at the three distinct locations P11, P12, P13 between the first contact surfaces 451 and the first base surface 141 to position the receiver unit 41 relative to the sensor base 14 around the Y-axis and also around the Z-axis. Each primary shim 15 is shaped in a circular flat plate form as a whole and is made of, for example, metal or resin. Each primary shim 15 may be formed from a single plate of shim material. Each primary shim 15 may be formed by a combination of a plurality of plates of shim material.

One of two opposed surfaces of each primary shim 15 is brought into surface contact with the first base surface 141, so that each primary shim 15 is arranged to have a thickness in the normal direction of the first base surface 141 (the axial direction of the X-axis in the first embodiment). The thickness of each primary shim 15 is individually set to an individual thickness T11, T12 or T13. With these thickness settings, each primary shim 15 brings a corner portion (i.e., an outer peripheral edge portion) 150 of the primary shim 15, which is located on the side opposite to the first base surface 141, into contact with the corresponding first contact surface 451. Here, particularly in the optical sensor 10, the primary shims 15 at the interposing locations (i.e., positioning locations) P11, P12 are arranged one after another in the axial direction of the Y-axis. At the same time, the primary shim 15 at an interposing location P13 is arranged such that the position of this primary shim 15 in the axial direction of the Z-axis is offset from the interposing locations P11, P12, while the position of this primary shim 15 in the axial direction of the Y-axis is displaced toward the interposing location P12 relative to the interposing location P11 (see also FIG. 6). With this configuration, at the locations P11, P12, P13, the primary shims 15 are positioned separately from each other along a plane that is parallel to the Y-Z plane.

Each primary shim 15 is screw-fastened between the corresponding first contact surface 451 and the first base surface 141 by a corresponding one of a plurality of primary fixing screws 17, each of which is individually assigned to the corresponding one of the primary shims 15. Each of the primary fixing screws 17 is shaped, for example, in a male-threaded form and is made of, for example, metal. A shaft portion of each of the primary fixing screws 17 is loosely inserted through a corresponding one of a plurality of through-holes of the receiver holder 450 along the normal direction of the corresponding first contact surface 451. Also, the shaft portion of each primary fixing screw 17 is loosely inserted into a fitting hole of the corresponding primary shim 15 along the normal direction of the corresponding first contact surface 451. Furthermore, the shaft portion of each primary fixing screw 17 is securely screwed into a corresponding one of female-threaded holes of the sensor base 14 along the normal direction of the first contact surface 451. With this screw-fastening structure, each of the primary fixing screws 17 fixes the receiver unit 41 to the sensor base 14 in a state where a corner portion (i.e., an outer peripheral edge portion) 170 of an end surface of a head of the primary fixing screw 17, which is on the shaft portion side of the primary fixing screw 17, is in contact with an opposite surface of the receiver holder 450 which is opposite to the primary shim 15.

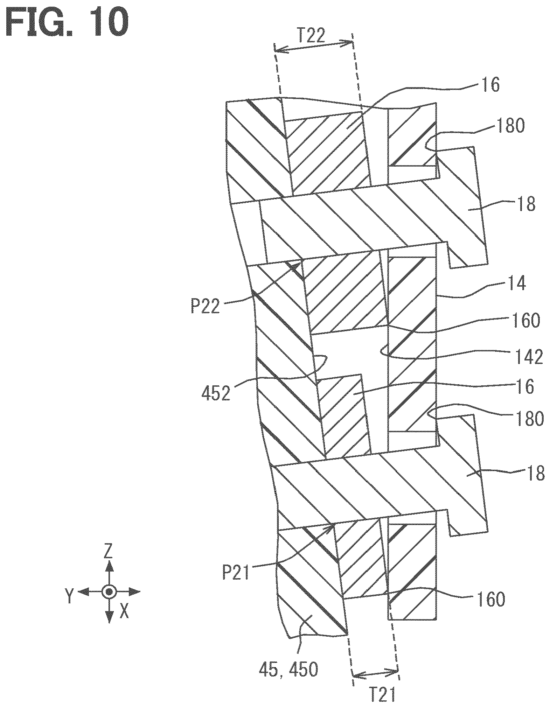

As shown in FIGS. 6 and 10, the second contact surface 452 is defined as a planar surface and clamps each of a plurality of secondary shims 16 between the second contact surface 452 and the second base surface 142 in the axial direction of the Y-axis and is arranged in a substantially perpendicular positional relationship with the first contact surface 451. The second contact surface 452 may be formed as a continuous surface common to the two locations P21, P22 which are set to position the receiver unit 41 relative to the sensor base 14 around the X-axis. The second contact surface 452 may be formed as a plurality of separate divided surfaces, each of which corresponds to a corresponding one of the two locations P21, P22 that are set to position the receiver unit 41 relative to the sensor base 14 around the X-axis. FIGS. 6 and 10 show an example of the second contact surface 452 which is formed as the continuous surface.

The plurality of secondary shims 16 are respectively interposed at the two locations P21, P22 between the second contact surface 452 and the second base surface 142 to position the receiver unit 41 relative to the sensor base 14 around the X-axis. Each secondary shim 16 is shaped in a circular flat plate form as a whole and is made of, for example, metal or resin. Each secondary shim 16 may be formed from a single plate of shim material. Each secondary shim 16 may be formed by a combination of a plurality of plates of shim material.

One of two opposed surfaces of each secondary shim 16 is brought into surface contact with the second contact surface 452, so that each secondary shim 16 is arranged to have a thickness in the normal direction of the second contact surface 452 (an inclined direction which is tilted relative to the Y-axis in the first embodiment). The thickness of each secondary shim 16 is individually set to an individual thickness T21 or T22. With these thickness settings, each secondary shim 16 brings a corner portion (i.e., an outer peripheral edge portion) 160 of the secondary shim 16, which is located on the side opposite to the second contact surface 452, into contact with the second base surface 142. Here, particularly in the optical sensor 10, the secondary shims 16 at the interposing locations (i.e., positioning locations) P21, P22 are arranged one after another in the axial direction of the Z-axis. With this configuration, at the locations P21, P22, the secondary shims 16 are positioned separately from each other along a plane that is parallel to the X-Z plane.

Each secondary shim 16 is screw-fastened between the second contact surface 452 and the second base surface 142 by a corresponding one of a plurality of secondary fixing screws 18, each of which is individually assigned to the corresponding one of the secondary shims 16. Each of the secondary fixing screws 18 is shaped, for example, in a male-threaded form and is made of, for example, metal. A shaft portion of each of the secondary fixing screws 18 is loosely inserted through a corresponding one of a plurality of through-holes of the sensor base 14 along the normal direction of the second contact surface 452. Also, the shaft portion of each secondary fixing screw 18 is loosely inserted into a fitting hole of the corresponding secondary shim 16 along the normal direction of the second contact surface 452. Furthermore, the shaft portion of each secondary fixing screw 18 is securely screwed into a corresponding one of female-threaded holes of the receiver holder 450 along the normal direction of the second contact surface 452. With this screw-fastening structure, each of the secondary fixing screws 18 fixes the receiver unit 41 to the sensor base 14 in a state where a corner portion (i.e., an outer peripheral edge portion) 180 of an end surface of a head of the secondary fixing screw 18, which is on the shaft portion side of the secondary fixing screw 18, is in contact with an opposite surface of the projection of the sensor base 14 which is opposite to the secondary shim 16.

As shown in FIGS. 6, 8 and 9, in the positioning state of the receiver holder 450 positioned by each of the base surfaces 141, 142 through the corresponding shims 15, 16, in the ideal (i.e., design) state where the same type of shims 15, 16 have the common thickness, a received light virtual axis Vr, which is designed to be parallel to the axial direction of the Z-axis, is geometrically assumed. With this assumption, the received light virtual axis Vr is defined to be parallel to both the first contact surface 451 and the second contact surface 452. In the receiver holder 450, an orientation angle tolerance relative to the received light virtual axis Vr in the three-dimensional coordinate system is assumed for the holding orientation of the circuit board 454 and/or the arranging orientation of each photodetector pixels 46 on the circuit board 224. Similarly, in the lens barrel 421, an orientation angle tolerance relative to the received light virtual axis Vr in the three-dimensional coordinate system is assumed for the bonding orientation to the receiver holder 450 and/or the holding orientation of the receiver lens 420.

From these considerations, in the final product of the optical sensor 10, as shown in FIGS. 6, 8 and 9, an orientation angle deviation δr of the received light optical axis Or relative to the received light virtual axis Vr in the three-dimensional coordinate system appears in at least one of the Y-Z plan view, the X-Z plan view and the X-Y plan view. Specifically, in the Y-Z plan view of FIG. 6, the orientation angle deviation δr of the received light optical axis Or relative to the received light virtual axis Vr appears as an inclination angle of the received light optical axis Or around the X-axis, with the bonding interface between the lens barrel 421 and the receiver holder 450 serving as the center of this inclination. In addition, in the X-Z plan view of FIG. 8, the orientation angle deviation δr of the received light optical axis Or relative to the received light virtual axis Vr appears as an inclination angle of the received light optical axis Or around the Y-axis, with the bonding interface between the lens barrel 421 and the receiver holder 450 serving as the center of this inclination. Furthermore, in the X-Y plan view of FIG. 9, the orientation angle deviation δr of the received light optical axis Or relative to the received light virtual axis Vr appears as a rotational angle of the reflection beam Br around the Z-axis on the received light optical axis Or, deviating from the ideal reflection beam Brv on the received light virtual axis Vr at the bonding interface between the lens barrel 421 and the receiver holder 450.

Based on the above points, in the product state of the optical sensor 10, as shown in FIGS. 6 to 9, in each of the Y-Z plan view, the X-Z plan view and the X-Y plan view, the adjusted orientation angle θ of the received light optical axis Or in the three-dimensional coordinate system is adjusted to an angle, at which the received light optical axis Or is aligned along the projected light optical axis Op. As a result, the adjusted orientation angle θ of the received light optical axis Or substantially coincides with the orientation angle deviation δp of the projected light optical axis Op relative to the projected light virtual axis Vp in the three-dimensional coordinate system. Accordingly, the adjusted orientation angle θ is selected to make a positioning orientation angle ψ of the received light virtual axis Vr substantially coincide with a relative error δp_r (= δp - δr) between the orientation angle deviation δp of the projected light optical axis Op relative to the projected light virtual axis Vp and the orientation angle deviation δr of the received light optical axis Or relative to the received light virtual axis Vr in the three-dimensional coordinate system. Here, each of the orientation angle deviations δp and δr is defined, for each plan view corresponding to the relative error δp_r, as a signed angle (i.e., an angle with a positive or negative sign) in the corresponding figure among FIGS. 6 to 9, in which a clockwise direction is regarded as positive and a counterclockwise direction as negative. In this way, the relative error δp_r in each plan view is also treated as a signed angle and is used for determining the positioning orientation angle ψ.

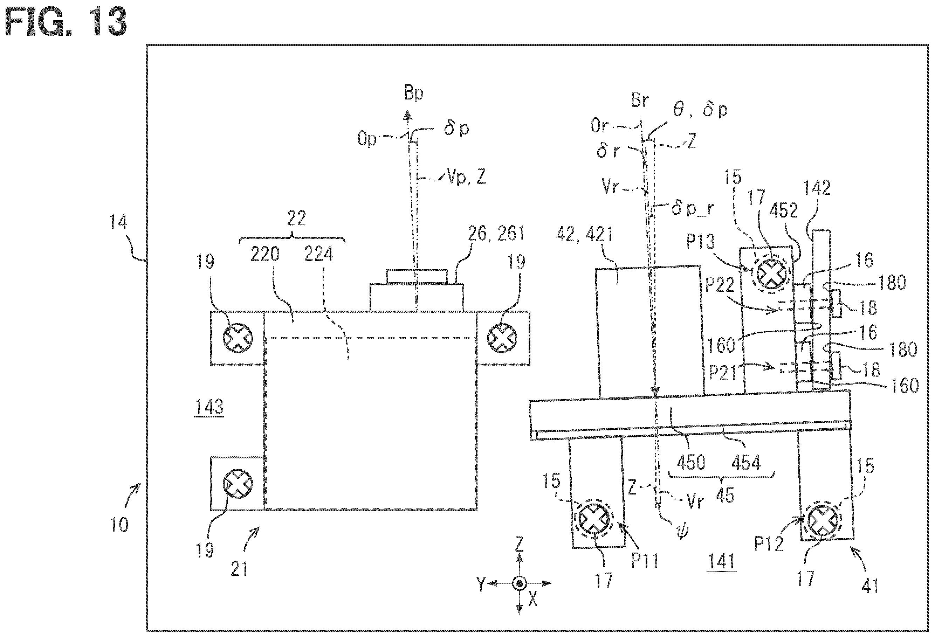

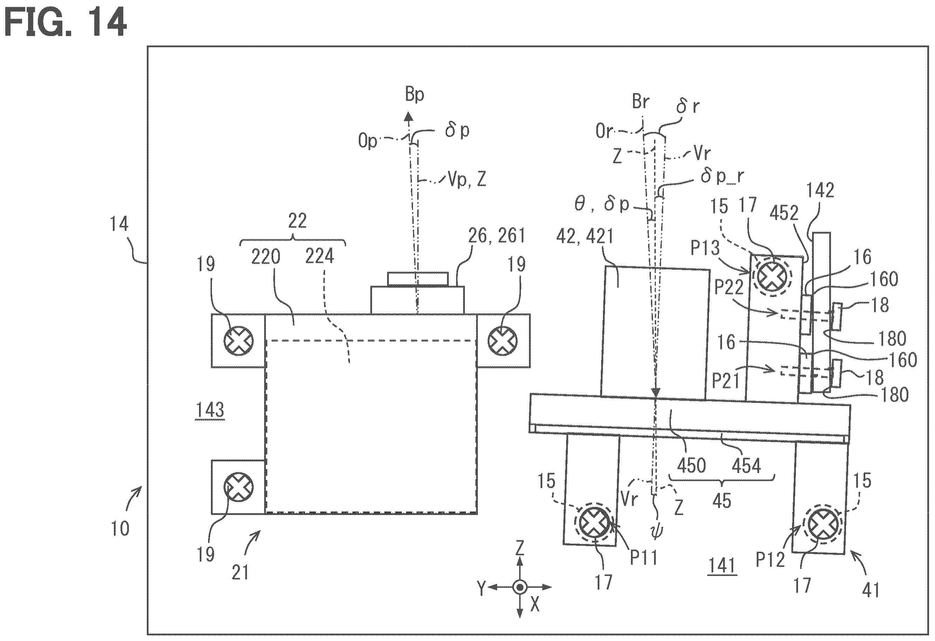

Specifically, in the Y-Z plan view of FIG. 6 and in the Y-Z plan view of each of FIGS. 13 and 14 (modifications of FIG. 6), the inclination angle, by which the received light optical axis Or is tilted around the X-axis from the Z-axis, is adjusted as the orientation angle θ, at which the received light optical axis Or is aligned along the projected light optical axis Op. Therefore, in the Y-Z plan view, there is selected the adjusted orientation angle θ that makes the positioning orientation angle ψ, which tilts the received light virtual axis Vr around the X-axis from the Z-axis, substantially coincide with the relative error δp_r between the orientation angle deviations δp, δr in the Y-Z plan view. FIG. 6 illustrates an example of the relative error δp_r, which is a negative value of a sum of the absolute values of the orientation angle deviations δp and δr in a pattern where δp is negative and δr is positive. FIG. 13 illustrates an example of the relative error δp_r, which is a negative value of a difference between the absolute values of the orientation angle deviations δp and δr, in a pattern where both δp and δr are negative and the absolute value of δr is smaller than that of δp. FIG. 14 illustrates an example of the relative error δp_r, which is a positive value of a difference between the absolute values of the orientation angle deviations δp and δr, in a pattern where both δp and δr are negative and the absolute value of δr is larger than the absolute value of δp. In addition, in a pattern where the positive/negative relationship between the orientation angle deviations δp, δr is reversed for each of the above examples, the positive/negative relationship of the relative error δp_r is also reversed.

In addition, in the X-Z plan view of each of FIGS. 7 and 8, the inclination angle, by which the received light optical axis Or is tilted around the Y-axis from the Z-axis, is adjusted as the orientation angle θ, at which the received light optical axis Or is aligned along the projected light optical axis Op. Therefore, in the X-Z plan view, there is selected the adjusted orientation angle θ that makes the positioning orientation angle ψ, which tilts the received light virtual axis Vr around the Y-axis from the Z-axis, substantially coincide with the relative error δp_r between the orientation angle deviations δp, δr in the X-Z plan view. Here, each of FIGS. 7 and 8 illustrates an example of the relative error δp_r, which is a positive value of a sum of the absolute values of the orientation angle deviations δp and δr, in a pattern where δp is positive and δr is negative. The relative error δp_r in patterns other than the illustrated examples follows the patterns in the Y-Z plane.

Furthermore, in the X-Y plan view of FIG. 9, the Y-axis is an axis, parallel to which the ideal reflection beam Br in the linear form should extend, and the rotational angle, by which the reflection beam Br on the received light optical axis Or is rotated around the Z-axis from the Y-axis, is adjusted as the orientation angle θ, at which the received light optical axis Or is aligned along the projected light optical axis Op. Therefore, in the X-Y plan view, there is selected the adjusted orientation angle θ that makes the positioning orientation angle ψ, by which the received light virtual axis Vr is rotated around the Z-axis from the Y-axis together with the assumed reflection beam Brv thereon, substantially coincide with the relative error bp_r between the orientation angle deviations δp, δr in the X-Y plan view. FIG. 9 illustrates an example of the relative error δp_r, which is a negative value of a sum of the absolute values of the orientation angle deviations δp and δr, in a pattern where δp is negative and δr is positive. The relative error δp_r in patterns other than the illustrated examples follows the patterns in the Y-Z plane.

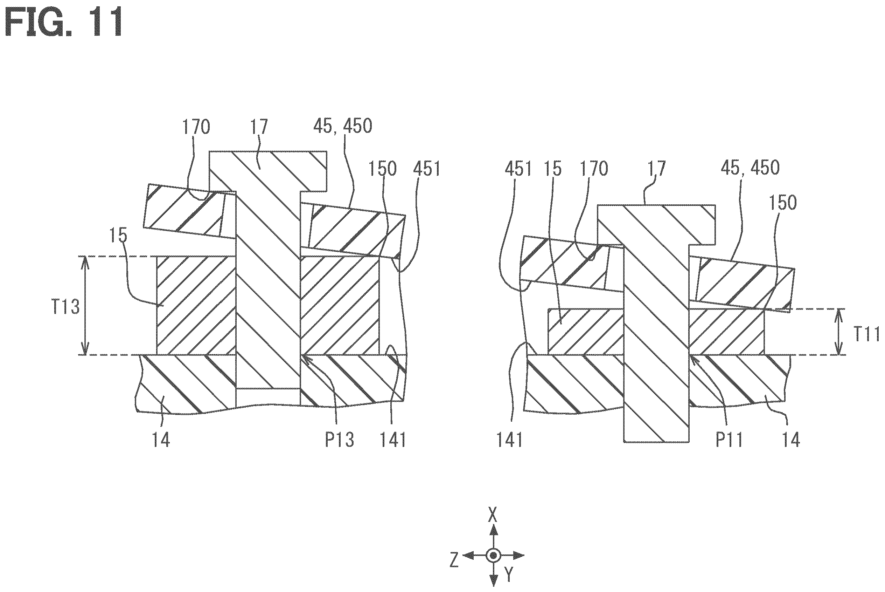

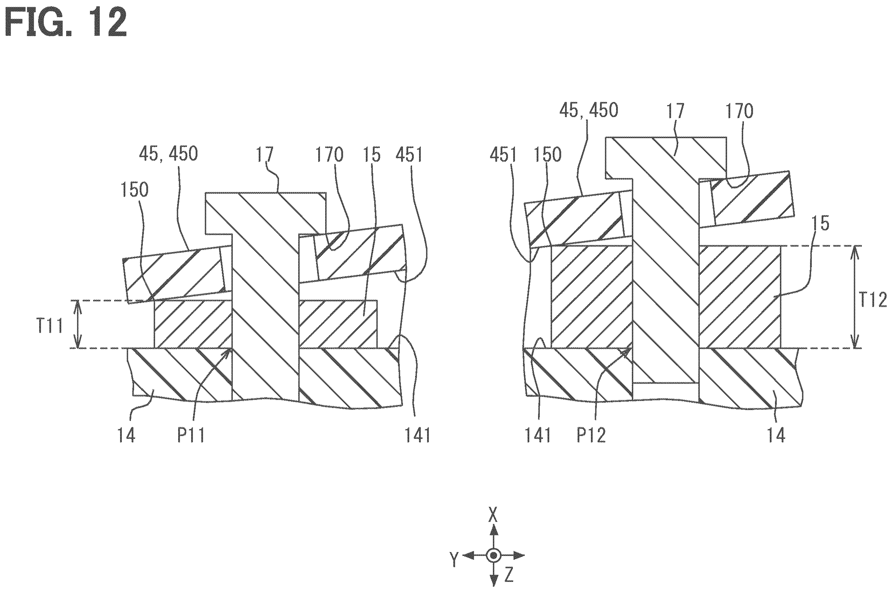

According to this adjustment principle, the individual thicknesses T11, T12, T13 of the primary shims 15 are determined as shown in FIGS. 11 and 12, according to the correlation between: the absolute value and the positive/negative sign around the Y-axis of the adjusted orientation angle θ in the X-Z plan view; and the absolute value and the positive/negative sign around the Z-axis of the adjusted orientation angle θ in the X-Y plan view. Also, the individual thicknesses T21, T22 of the secondary shims 16 are determined as shown in FIG. 10, according to the absolute value and the positive/negative sign around the X-axis of the adjusted orientation angle θ in the Y-Z plan view.

### (Manufacturing method)

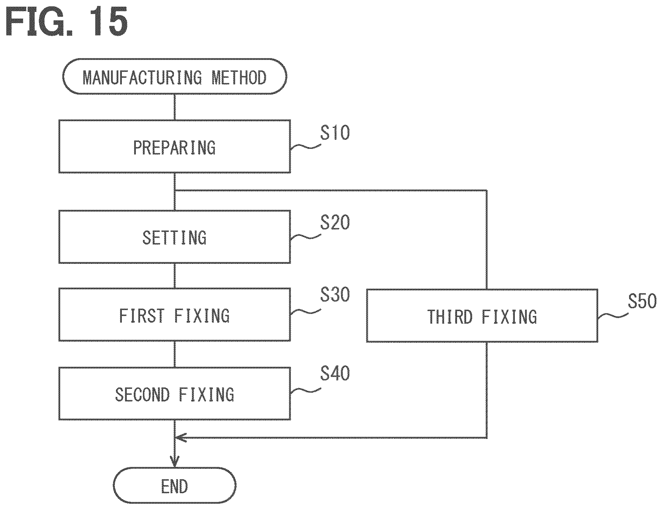

Next, a manufacturing method of the optical sensor 10 will be described according to a manufacturing flow shown in FIG. 15. In the manufacturing flow shown in FIG. 15, "S" represents "manufacturing step" for manufacturing the optical sensor 10.

In a preparing step of S10, the adjusted orientation angle θ of the received light optical axis Or in the three-dimensional coordinate system is selected, and the individual thicknesses T11, T12, T13 of the primary shims 15 and the individual thicknesses T21, T22 of the secondary shims 16 are determined. Specifically, first, the orientation angle deviation δp of the projected light optical axis Op relative to the projected light virtual axis Vp in the projector unit 21 and the orientation angle deviation δr of the received light optical axis Or relative to the received light virtual axis Vr in the receiver unit 41 are each measured. At this time, each of the orientation angle deviations δp, δr becomes measurable as the corresponding optical axis Op, Or is identified based on the focused state of the corresponding beam Bp, Br at the corresponding specific location.

In the preparing step of S10, based on the results of these measurements, the adjusted orientation angle θ is selected such that the adjusted orientation angle θ makes the positioning orientation angle ψ of the received light virtual axis Vr in the three-dimensional coordinate system defined by the sensor base 14 substantially coincide with the relative error δp_r between the orientation angle deviations δp, δr. Furthermore, the individual thicknesses T11, T12, T13 of the primary shims 15 and the individual thicknesses T21, T22 of the secondary shims 16 are determined so as to achieve the selected adjusted orientation angle θ.

In a setting step of S20, the primary shims 15 and the secondary shims 16, each of which has the corresponding thickness that corresponds to the adjusted orientation angle θ determined in S10, are interposed such that each of the primary shims 15 is interposed between the first base surface 141 and the first contact surface 451, and each of the secondary shims 16 is interposed between the second base surface 142 and the second contact surface 452. As a result, the receiver unit 41, together with the projector unit 21, is set on the sensor base 14 in the positioning state that provides the received light optical axis Or adjusted to the orientation angle θ, at which the received light optical axis Or is aligned along the projected light optical axis Op.

In a first fixing step of S30, with respect to the receiver unit 41 in a state where the received light optical axis Or held at the adjusted orientation angle θ determined in S20 is maintained, each of the primary shims 15 is screw-fastened between the first base surface 141 and the first contact surface 451 by the corresponding one of the primary fixing screws 17. At this time, the primary shims 15 are sequentially screw-fastened in ascending order of thickness with respect to the thicknesses of the primary shims 15 starting with one of the primary shims 15, which has a smallest thickness among the primary shims 15.

In a second fixing step of S40, with respect to the receiver unit 41 in the state where the received light optical axis Or held at the adjusted orientation angle θ is continuously maintained even after the first fixing step of S30, each of the secondary shims 16 is screw-fastened between the second base surface 142 and the second contact surface 452 by the corresponding one of the secondary fixing screws 18. At this time, the secondary shims 16 are sequentially screw-fastened in ascending order of thickness with respect to the thicknesses of the secondary shims 16 starting with one of the secondary shims 16, which has a smallest thickness among the secondary shims 16. As a result, the receiver unit 41 is fixed to the sensor base 14.

In a third fixing step of S50, which is carried out in parallel with or before/after S20 to S40 (FIG. 15 illustrates an example where the third fixing step is carried out in parallel with S20 to S40), the projector unit 21 is screw-fastened to the sensor base 14 so as to form the projected light optical axis Op in such a way that the received light optical axis Or is aligned along the projected light optical axis Op. Thus, upon completion of S40 and S50, the manufacturing of the optical sensor 10 is completed.

### (Actions and Advantages)

Actions and advantages of the first embodiment described above will be explained below.

According to the first embodiment, each of the primary shims 15, which are respectively positioned at the three locations P11, P12, P13, has the thickness T11, T12, T13 individually set based on the adjusted orientation angle θ of the received light optical axis Or in the three-dimensional coordinate system and is thereby screw-fastened between the first base surface 141, which is parallel to the Y-Z plane at the sensor base 14, and the first contact surface 451 of the receiver unit 41 in the state where the corner portion 150 of each of the plurality of primary shims 15 is in contact with the first contact surface 451. Thus, the positioning state of the receiver unit 41 relative to the sensor base 14 around the Y-axis and also around the Z-axis can be uniquely defined in the three-point support state in accordance with the adjusted orientation angle θ of the received light optical axis Or.

In addition, according to the first embodiment, each of the secondary shims 16, which are respectively positioned at the two locations P21, P22, has the thickness T21, T22 individually set based on the adjusted orientation angle θ of the received light optical axis Or in the three-dimensional coordinate system and is thereby screw-fastened between the second base surface 142 and the second contact surface 452 of the receiver unit 41, while the second contact surface 452 is perpendicular to the first contact surface 451, in the state where the corner portion 160 of each of the secondary shims 16 is in contact with the second base surface 142, which is parallel to the X-Z plane at the sensor base 14. Thus, the positioning state of the receiver unit 41 relative to the sensor base 14 around the X-axis can be uniquely defined in the two-point support state in accordance with the adjusted orientation angle θ of the received light optical axis Or, while suppressing interference with the above-mentioned three-point support.

According to the first embodiment, the orientation of the received light optical axis Or of the receiver unit 41 can be adjusted around each of the X, Y, and Z axes in the three-dimensional coordinate system of the sensor base 14. Therefore, it becomes possible to ensure the accuracy of optical axis adjustment.

According to the first embodiment, the primary shims 15 and the secondary shims 16 are respectively screw-fastened by the corresponding one of the fixing screws 17, 18, each of which is configured to fix the receiver unit 41 to the sensor base 14 and is individually assigned to the corresponding one of the primary shims 15 and the secondary shims 16, in the state where the corner portion 170, 180 of the head of each of the fixing screws 17, 18 is in contact with either the receiver unit 41 or the sensor base 14. Accordingly, by screw-fastening each primary shim 15 and each secondary shim 16, which respectively have individual thicknesses corresponding to the adjusted orientation angle θ of the received light optical axis Or in the three-dimensional coordinate system, it is possible to accurately achieve both the three-point support state at the three distinct locations P11, P12, P13, which are spaced apart along the plane that is parallel to the Y-Z plane, and the two-point support state at the two distinct locations P21, P22, which are spaced apart along the plane that is parallel to the X-Z plane. Therefore, it becomes possible to contribute to improving the reliability of the effect of ensuring the accuracy of optical axis adjustment.

According to the first embodiment, each primary shim 15 and each secondary shim 16 respectively have the corresponding thickness, which corresponds to the angle that is defined as the adjusted orientation angle θ of the received light optical axis Or and makes the received light optical axis Or align in parallel with the projected light optical axis Op in the three-dimensional coordinate system. Accordingly, since the received light optical axis Or can be correctly aligned along the projected light optical axis Op, the accuracy of optical axis adjustment between the projector unit 21 and the receiver unit 41 can be ensured.

In the first embodiment, the projected light virtual axis Vp, which is parallel to the Z-axis, is assumed in the projector unit 21, and the received light virtual axis Vr, which is parallel to both the first contact surface 451 and the second contact surface 452, is assumed in the receiver unit 41. Accordingly, in the first embodiment, each primary shim 15 and each secondary shim 16 respectively have the individually set thickness corresponding to the adjusted orientation angle θ, which makes the positioning orientation angle ψ of the received light virtual axis Vr coincide with the relative error δp_r between the orientation angle deviation δp of the projected light optical axis Op relative to the projected light virtual axis Vp and the orientation angle deviation δr of the received light optical axis Or relative to the received light virtual axis Vr in the three-dimensional coordinate system. Accordingly, since the orientation of the received light optical axis Or can be geometrically and correctly adjusted relative to the projected light optical axis Op, it is possible to improve the accuracy of optical axis adjustment between the projector unit 21 and the receiver unit 41.

According to the first embodiment, after the primary shims 15 are screw-fastened at the three distinct locations P11, P12, P13, respectively, which are set to position the receiver unit 41 in the three-point support state relative to the sensor base 14, the secondary shims 16 are screw-fastened at the two distinct locations P21, P22, respectively, which are set to position the receiver unit 41 in the two-point support state relative to the sensor base 14. Accordingly, it is possible to achieve the two-point support state while avoiding interference with the uniquely defined three-point support state, thereby enhancing the accuracy of optical axis adjustment.

According to the first embodiment, the primary shims 15 are sequentially screw-fastened in the ascending order of thickness with respect to the thicknesses of the primary shims 15 starting with the one of the primary shims 15, which has the smallest thickness among the primary shims 15, and the secondary shims 16 are also sequentially screw-fastened in the ascending order of thickness with respect to the thicknesses of the secondary shims 16 starting with the one of the secondary shims 16, which has the smallest thickness among the secondary shims 16. Accordingly, it is possible to reduce the moment acting on the receiver unit 41, particularly during the screw-fastening of the one of the primary shims 15, which has the smallest thickness, and the screw-fastening of the one of the secondary shims 16, which has the smallest thickness, thereby suppressing the stress distortion generated in the receiver unit 41 due to this moment. Therefore, it becomes possible to suppress variations in screw axial force caused by the stress distortion and ensure the accuracy of optical axis adjustment.

### (Second Embodiment)

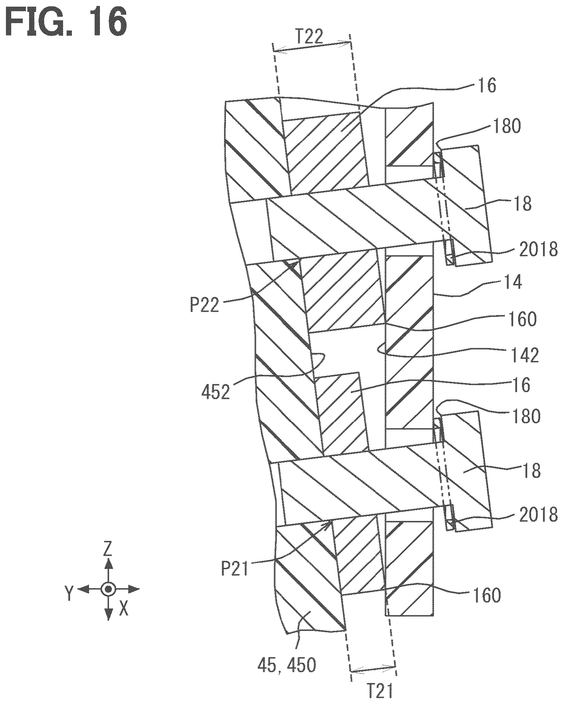

As shown in FIGS. 16-18, the second embodiment is a modification of the first embodiment.

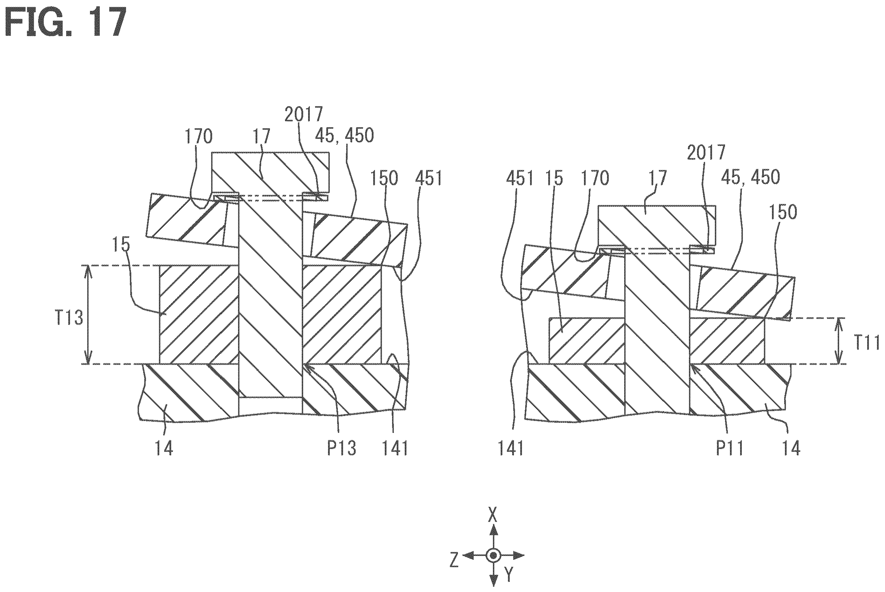

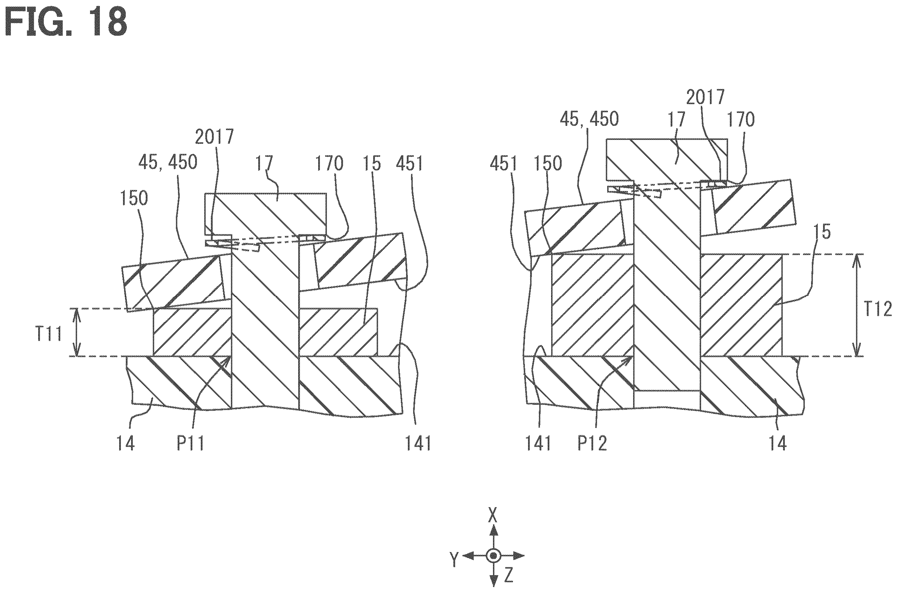

In the second embodiment, the primary shims 15 shown in FIGS. 17 and 18 are respectively screw-fastened by a corresponding one of the primary fixing screws 17, each of which is configured to fix the receiver unit 41 to the sensor base 14 and is individually assigned to a corresponding one of the primary shims 15, in a state where a corresponding one of a plurality of spring washers 2017 made of metal is clamped between a head of the corresponding one of the primary fixing screws 17 and the receiver holder 450 of the receiver unit 41. In addition, the secondary shims 16 shown in FIG. 16 in the second embodiment are respectively screw-fastened by a corresponding one of the secondary fixing screws 18, each of which is configured to fix the receiver unit 41 to the sensor base 14 and is individually assigned to a corresponding one of the secondary shims 16, in a state where a corresponding one of a plurality of spring washers 2018 made of metal is clamped between a head of the corresponding one of the secondary fixing screws 18 and the sensor base 14.

Even in the second embodiment, by screw-fastening each primary shim 15 and each secondary shim 16, which respectively have the individual thicknesses corresponding to the adjusted orientation angle θ of the received light optical axis Or in the three-dimensional coordinate system, at the different locations, it is possible to accurately achieve both the three-point support state at the three distinct locations P11, P12, P13, which are spaced apart along the plane that is parallel to the Y-Z plane, and the two-point support state at the two distinct locations P21, P22, which are spaced apart along the plane that is parallel to the X-Z plane. Therefore, it becomes possible to contribute to improving the reliability of the effect of ensuring the accuracy of optical axis adjustment. Moreover, according to the second embodiment, the spring washers 2017, 2018 can suppress the misalignment of the orientations of the units 21, 41 caused by vehicle vibrations, thereby making it possible to continuously ensure the accuracy of optical axis adjustment.

### (Third Embodiment)

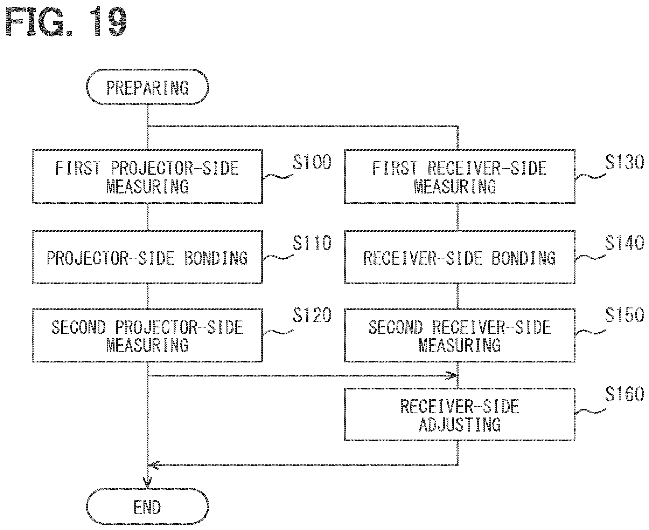

As shown in FIGS. 19 to 23, the third embodiment is a modification of the first embodiment.

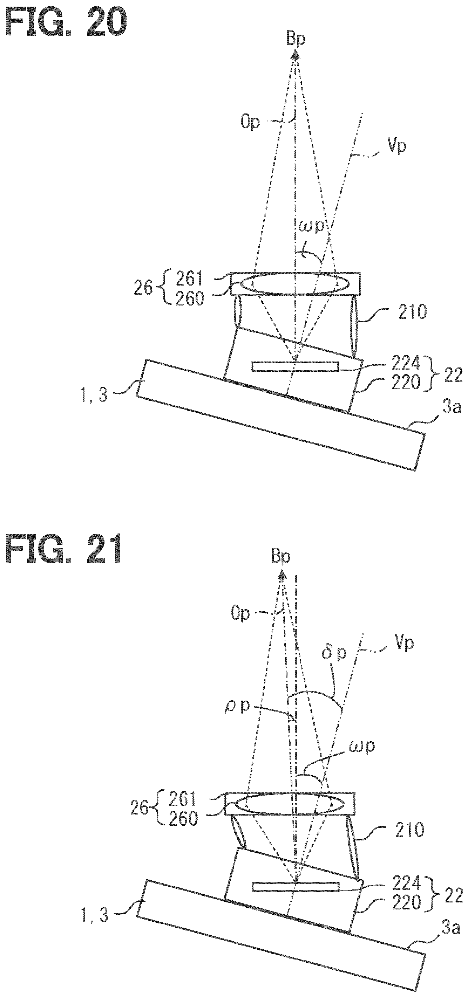

In the manufacturing method of the optical sensor 10 according to the third embodiment, the preparing step of S10 is executed in accordance with a preparing subroutine shown in FIG. 19. In FIGS. 20 to 23, which will be described later, the angles, which correspond to the first embodiment, are schematically enlarged to facilitate understanding of the explanation.

A first projector-side measuring step of S100 in a projector-side sequence of the preparing subroutine is executed. In the first projector-side measuring step of S100, a projected light focusing angle ωp, which is an angle defined by the projected light optical axis Op relative to the projected light virtual axis Vp, is measured in a focused state of the projection beam Bp. Specifically, in the first projector-side measuring step, the projector holder 220 is mounted on a movable base surface 3a of a movable stage 3 at a manufacturing apparatus 1 shown in FIG. 20 so that the projector holder 220 can be driven integrally with the movable base surface 3a of the movable stage 3. At this time, a projector adhesive 210, which is in an uncured state such as a gel state, is interposed at a bonding interface between the lens barrel 261 and the projector holder 220.

Accordingly, in the first projector-side measuring step, the projected light focusing angle ωp, which provides a focused state of the projection beam Bp on a screen positioned at a specified distance from the projector lens module 26, is searched three-dimensionally through a process of defocusing that evaluates the degree of light convergence, such as an image size, at the location of the screen. Here, the focused state may refer to a state in which the projection beam Bp, which is in the line form, is entirely focused within a permissible circle of confusion in a longitudinal direction of the line form. A measurement value of the projected light focusing angle ωp, which is obtained through this search, may be corrected based on a three-dimensional orientation angle error of the movable base surface 3a at the movable stage 3.

Next, a projector-side bonding step of S110 in the projector-side sequence of the preparing subroutine is executed. In the projector-side bonding step of S110, the projector lens module 26 is bonded to the projector light source module 22 via the projector adhesive 210 by curing the projector adhesive 210 between the lens barrel 261 and the projector holder 220. At this time, the projector adhesive 210 is cured by ultraviolet (UV) irradiation from at least a radially outer side of the projector adhesive 210 around the projected light optical axis Op. The projector adhesive 210 may be heat-cured in addition to such ultraviolet (UV) curing.

Then, a second projector-side measuring step of S120 in the projector-side sequence of the preparing subroutine is executed to measure a projected light error angle ρp. As indicated in FIG. 21, the projected light error angle ρp occurs in the projected light optical axis Op of the projector lens module 26, which is bonded to the projector light source module 22 by curing the projector adhesive 210. Accordingly, in the second projector-side measuring step, the focused state of the projection beam Bp on the screen positioned at the specified distance from the projector lens module 26 is three-dimensionally searched, as in S100, and thereby the projected light error angle ρp of the projected light optical axis Op, which corresponds to the deviation of the focused state, is three-dimensionally measured. As a result of this search, the sum of the projected light focusing angle ωp obtained in S100 and the projected light error angle ρp obtained in S120 is acquired as the three-dimensional orientation angle deviation δp (δp = ωp + ρp) of the projected light optical axis Op relative to the projected light virtual axis Vp.

In the second projector-side measuring step, a measurement value of the projected light error angle ρp may be corrected based on a three-dimensional orientation angle error of the movable base surface 3a at the movable stage 3. However, if in S120, a different movable stage 3, which is different from that in S100, is used in such a manner that the orientation of the movable base surface 3a in S100 is reproduced, the correction may be performed based on the orientation angle error of the movable base surface 3a in each of S100 and S120.

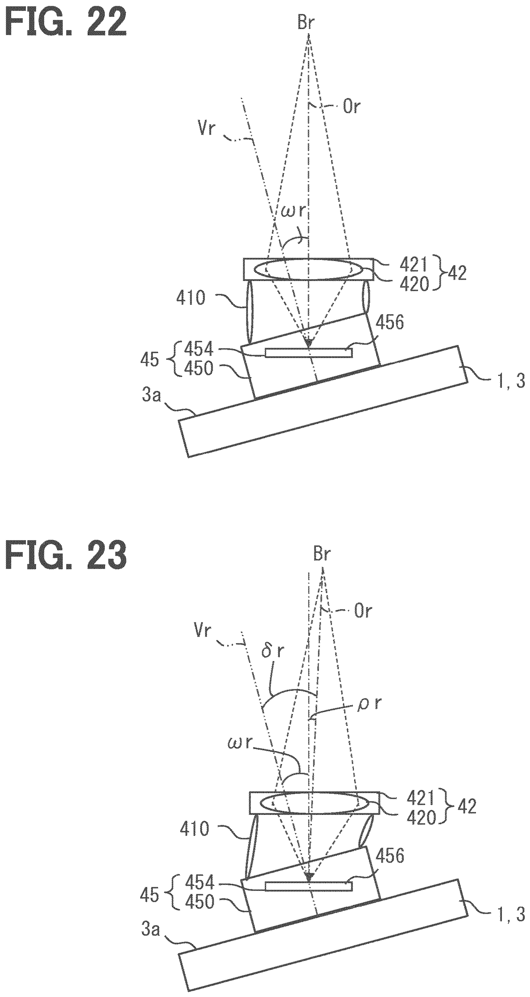

A first receiver-side measuring step of S130, which is executed in association with the projector-side sequence, in a receiver-side sequence of the preparing subroutine is executed. In the first receiver-side measuring step of S130, a received light focusing angle ωr, which is an angle defined by the received light optical axis Or relative to the received light virtual axis Vr, is measured in a focused state of the reflection beam Br. Specifically, in the first receiver-side measuring step, the receiver holder 450 is mounted on the movable base surface 3a of the movable stage 3 at the manufacturing apparatus 1 shown in FIG. 22 so that the receiver holder 450 can be driven integrally with the movable base surface 3a of the movable stage 3. At this time, a receiver adhesive 410, which is in an uncured state such as a gel state, is interposed at a bonding interface between the lens barrel 421 and the receiver holder 450.

Accordingly, in the first receiver-side measuring step, the received light focusing angle ωr, which provides a focused state of the reflection beam Br on the light receiving surface 456 of the receiver photodetector module 45, is searched through a process of defocusing that evaluates the degree of light convergence, such as image size or energy, at the location of the light receiving surface 456. Here, the focused state may refer to a state in which the reflection beam Br, which is in the line form, is entirely focused within a permissible circle of confusion in a longitudinal direction of the line form. A measurement value of the received light focusing angle ωr, which is obtained through this search, may be corrected based on a three-dimensional orientation angle error of the movable base surface 3a at the movable stage 3.

Next, a receiver-side bonding step of S140 in the receiver-side sequence of the preparing subroutine is executed. In the receiver-side bonding step of S140, the receiver lens module 42 is bonded to the receiver photodetector module 45 via the receiver adhesive 410 by curing the receiver adhesive 410 between the lens barrel 421 and the receiver holder 450. At this time, the receiver adhesive 410 is cured by ultraviolet (UV) irradiation from at least a radially outer side of the receiver adhesive 410 around the received light optical axis Or. The receiver adhesive 410 may be heat-cured in addition to such ultraviolet (UV) curing.

Then, a second receiver-side measuring step of S150 in the receiver-side sequence of the preparing subroutine is executed to measure a received light error angle ρr. As indicated in FIG. 23, the received light error angle ρr occurs in the received light optical axis Or of the receiver lens module 42, which is bonded to the receiver photodetector module 45 by curing the receiver adhesive 410. Accordingly, in the second receiver-side measuring step, the focused state of the reflection beam Br on the light receiving surface 456 of the receiver photodetector module 45 is three-dimensionally searched, as in S120, and thereby the received light error angle ρr of the received light optical axis Or, which corresponds to the deviation of the focused state, is three-dimensionally measured. As a result of this search, the sum of the received light focusing angle ωr obtained in S130 and the received light error angle ρr obtained in S150 is acquired as the three-dimensional orientation angle deviation δr (δr = ωr + ρr) of the received light optical axis Or relative to the received light virtual axis Vr.

In the second receiver-side measuring step, a measurement value of the received light error angle ρr may be corrected based on a three-dimensional orientation angle error of the movable base surface 3a at the movable stage 3. However, if in S150, a different movable stage 3, which is different from that in S130, is used in such a manner that the orientation of the movable base surface 3a in S130 is reproduced, the correction may be performed based on the orientation angle error of the movable base surface 3a in each of S130 and S150.

In a receiver-side adjusting step of S160 in the receiver-side sequence of the preparing subroutine, the orientation angle deviation δp of the projected light optical axis Op obtained in S120 of the projector-side sequence and the orientation angle deviation δr of the received light optical axis Or obtained in S150 of the receiver-side sequence are retrieved. Accordingly, in the receiver-side adjusting step, the adjusted orientation angle θ is selected such that the positioning orientation angle ψ of the received light virtual axis Vr in the three-dimensional coordinate system substantially coincides with the relative error δp_r between the orientation angle deviations δp, δr. Furthermore, in the receiver-side adjusting step, the individual thicknesses T11, T12, T13 of the primary shims 15 and the individual thicknesses T21, T22 of the secondary shims 16 are determined so as to achieve the selected adjusted orientation angle θ.

In the above third embodiment, S20 to S50 following S10 of the preparing subroutine are executed as in the first embodiment. As a result, particularly, in S20 to S40 for the receiver unit 41, the primary shims 15 and the secondary shims 16, each of which has the corresponding thickness that corresponds to the adjusted orientation angle θ determined in S160, are interposed such that each of the primary shims 15 is interposed between the first base surface 141 and the first contact surface 451, and each of the secondary shims 16 is interposed between the second base surface 142 and the second contact surface 452.

According to the third embodiment described above, the positioning orientation angle ψ and the relative error δp_r coincide with each other, and thereby the orientation of the received light optical axis Or can be geometrically adjusted with high precision relative to the projected light optical axis Op. This ensures the accuracy of the optical axis adjustment between the projector unit 21 and the receiver unit 41. Furthermore, actions and advantages other than the coinciding of the angles can also be achieved, as in the first embodiment.

### (Fourth Embodiment)

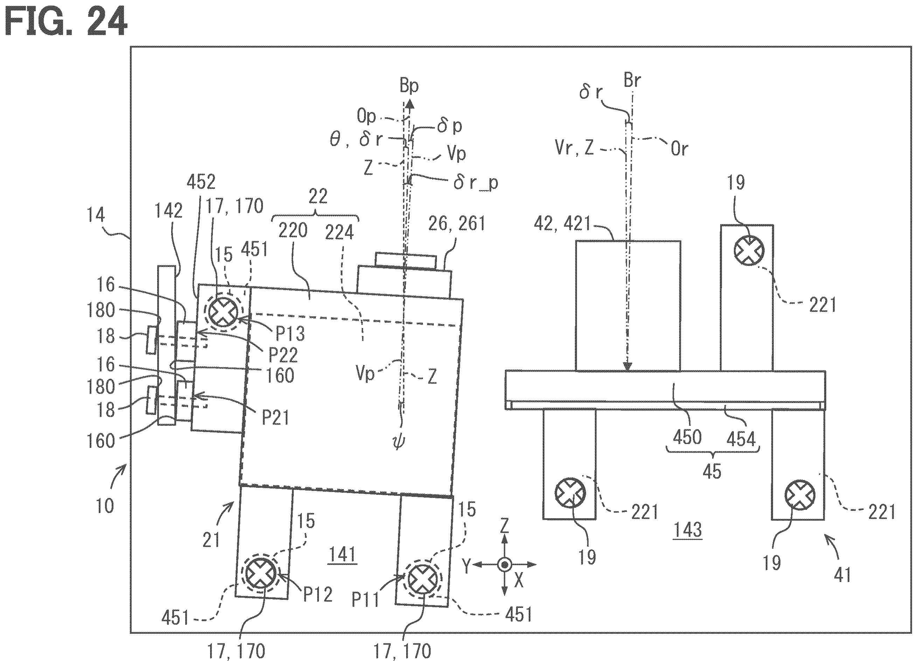

As shown in FIGS. 24 to 25, the fourth embodiment is a modification of the third embodiment.

In the optical sensor 10 of the fourth embodiment shown in FIG. 24, the base surfaces 141, 142 are provided at the projector unit 21, and the base surface 143 is provided at the receiver unit 41. In addition, the contact surfaces 451, 452 are provided at the projector holder 220, and the contact surface 221 is provided at the receiver holder 450.

In the optical sensor 10 of the fourth embodiment, the plurality of primary shims 15 are respectively interposed at the three distinct locations P11, P12, P13 between the first contact surfaces 451 and the first base surface 141 to position the projector unit 21 relative to the sensor base 14 around the Y-axis and also around the Z-axis. Accordingly, the shaft portion of each primary fixing screw 17 for screw-fastening the corresponding primary shim 15 is loosely inserted through a corresponding one of a plurality of through-holes of the projector holder 220 along the normal direction of the first contact surface 451 and is then fitted into the fitting hole of the corresponding primary shim 15 and securely screwed into a corresponding one of female-threaded holes of the sensor base 14. With this screw-fastening structure, each of the primary fixing screws 17 fixes the projector unit 21 to the sensor base 14 in a state where the corner portion (i.e., an outer peripheral edge portion) 170 of the end surface of the head of the primary fixing screw 17, which is on the shaft portion side of the primary fixing screw 17, is in contact with an opposite surface of the projector holder 220 which is opposite to the primary shim 15.

In the optical sensor 10 of the fourth embodiment, the plurality of secondary shims 16 are respectively interposed at the two distinct locations P21, P22 between the second contact surface 452 and the second base surface 142 to position the projector unit 21 relative to the sensor base 14 around the X-axis. Accordingly, the shaft portion of each secondary fixing screw 18 for screw-fastening the corresponding secondary shim 16 is loosely inserted through a corresponding one of a plurality of through-holes of the sensor base 14 along the normal direction of the second contact surface 452 and is then fitted into the fitting hole of the corresponding secondary shim 16 and securely screwed into a corresponding one of female-threaded holes of the projector holder 220. With this screw-fastening structure, each of the secondary fixing screws 18 fixes the projector unit 21 to the sensor base 14 in a state where the corner portion (i.e., an outer peripheral edge portion) 180 of the end surface of the head of the secondary fixing screw 18, which faces the shaft portion of the secondary fixing screw 18, is in contact with the opposite surface of the projection of the sensor base 14 which is opposite to the secondary shim 16.

In the fourth embodiment, a plurality of fixing screws 19 are provided to screw-fasten the receiver holder 450 to the sensor base 14, which is in surface contact with the contact surface 221 at the base surface 143. In addition, the shaft portion of each of the fixing screws 19 is loosely inserted through a corresponding one of a plurality of through-holes of the receiver holder 450 along the axial direction of the X-axis and is securely screwed into a corresponding one of female-threaded holes of the sensor base 14. With this screw-fastening structure, each of the fixing screws 19 fixes the receiver unit 41 to the sensor base 14 in a state where the end surface of the head of the fixing screw 19 is in surface contact with an opposite surface of the receiver holder 450 which is opposite to the sensor base 14.

In the fourth embodiment, the projected light virtual axis Vp at the projector holder 220 is defined to be parallel to both the first contact surface 451 and the second contact surface 452, and the received light virtual axis Vr at the receiver holder 450 is defined to be parallel to the axial direction of the Z-axis and the contact surface 221. Even under these definitions, the orientation angle deviation δp of the projected light optical axis Op relative to the projected light virtual axis Vp and the orientation angle deviation δr of the received light optical axis Or relative to the received light virtual axis Vr in the three-dimensional coordinate system follow those in the first embodiment.

In the product state of the optical sensor 10 according to the fourth embodiment, the adjusted orientation angle θ of the projected light optical axis Op in the three-dimensional coordinate system is adjusted to the angle, at which the projected light optical axis Op is aligned along the received light optical axis Or. As a result, the adjusted orientation angle θ of the projected light optical axis Op substantially coincides with the orientation angle deviation δr of the received light optical axis Or relative to the received light virtual axis Vr in the three-dimensional coordinate system. Accordingly, the adjusted orientation angle θ is selected to make a positioning orientation angle ψ of the projected light virtual axis Vp in the three-dimensional coordinate system substantially coincide with a relative error δr_p (= δr - δp) between the orientation angle deviation δr of the received light optical axis Or relative to the received light virtual axis Vr and the orientation angle deviation δp of the projected light optical axis Op relative to the projected light virtual axis Vp.

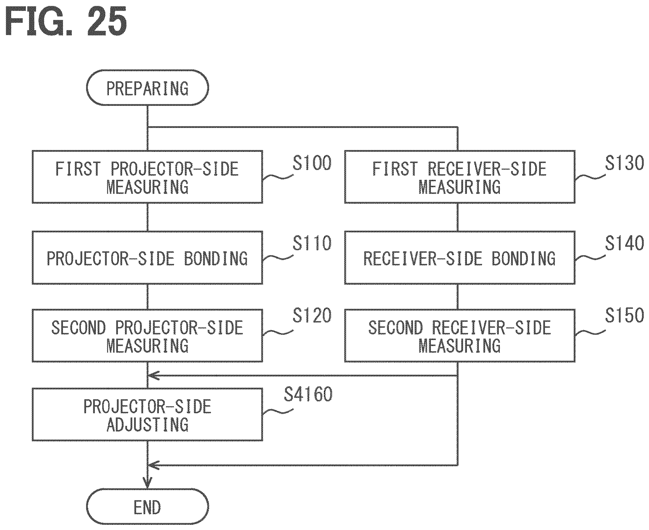

In the manufacturing method of the optical sensor 10 according to the fourth embodiment, the preparing step of S10 is executed in accordance with a preparing subroutine shown in FIG. 25.

In the preparing subroutine of the fourth embodiment, the receiver-side adjusting step of S160 of the third embodiment is omitted from the receiver-side sequence. Instead, a projector-side adjusting step of S4160 following S120 is executed in the projector-side sequence. Specifically, in the projector-side adjusting step, the orientation angle deviation δr of the received light optical axis Or obtained in S150 of the receiver-side sequence and the orientation angle deviation δp of the projected light optical axis Op obtained in S120 of the projector-side sequence are retrieved. Accordingly, in the projector-side adjusting step, the adjusted orientation angle θ is selected such that the positioning orientation angle ψ of the projected light virtual axis Vp in the three-dimensional coordinate system substantially coincides with the relative error δr_p between the orientation angle deviations δr, δp. Furthermore, in the projector-side adjusting step, the individual thicknesses T11, T12, T13 of the primary shims 15 and the individual thicknesses T21, T22 of the secondary shims 16 are determined so as to achieve the selected adjusted orientation angle θ.

In the above fourth embodiment, S20 to S50 following S10 of the preparing subroutine are executed as in the first embodiment. However, in S20 to S40, which are the steps for the projector unit 21, the primary shims 15 and the secondary shims 16, each of which has the corresponding thickness that corresponds to the adjusted orientation angle θ determined in S4160, are interposed such that each of the primary shims 15 is interposed between the first base surface 141 and the first contact surface 451, and each of the secondary shims 16 is interposed between the second base surface 142 and the second contact surface 452. As a result, the projector unit 21 is fixed to the sensor base 14. In contrast, in S50, which is the step related to the receiver unit 41, the receiver unit 41 is screw-fastened to the sensor base 14 so as to form the received light optical axis Or in such a way that the projected light optical axis Op is aligned along the received light optical axis Or.

According to the fourth embodiment described above, the positioning orientation angle ψ and the relative error δr_p coincide with each other, and thereby the orientation of the projected light optical axis Op can be geometrically adjusted with high precision relative to the received light optical axis Or. This ensures the accuracy of optical axis adjustment between the projector unit 21 and the receiver unit 41. Furthermore, in addition to the actions and advantages of coinciding the angles described above, the other actions and advantages, which are achieved by interchanging "light projection (projector-side)" and "light reception (receiver-side)" according to the first embodiment, can also be achieved.

### (Fifth Embodiment)

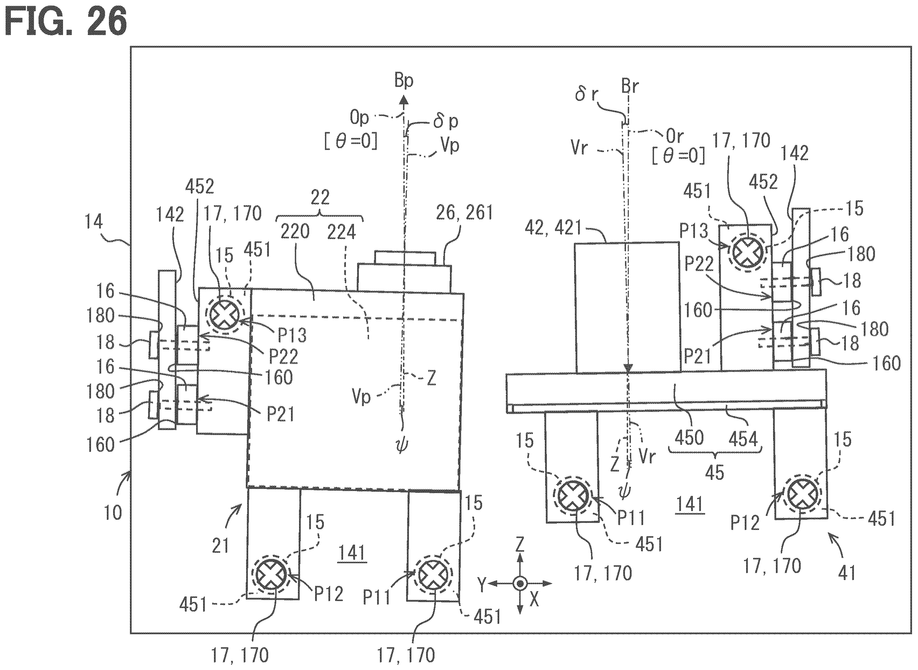

As shown in FIGS. 26 to 27, the fifth embodiment is a modification that combines and further modifies the third embodiment and the fourth embodiment.

In the optical sensor 10 of the fifth embodiment shown in FIG. 26, the base surfaces 141, 142 are provided at both the receiver unit 41 and the projector unit 21. In addition, the contact surfaces 451, 452 are provided at both the receiver holder 450 and the projector holder 220.

In the optical sensor 10 of the fifth embodiment, the plurality of primary shims 15 are respectively interposed at the three distinct locations P11, P12, P13 between the first contact surfaces 451 of the receiver holder 450 and the first base surface 141 set for the receiver unit 41 to position the receiver unit 41 relative to the sensor base 14 around the Y-axis and also around the Z-axis. In addition, the plurality of primary shims 15 are respectively interposed at the three distinct locations P11, P12, P13 between the first contact surfaces 451 of the projector holder 220 and the first base surface 141 set for the projector unit 21 to position the projector unit 21 relative to the sensor base 14 around the Y-axis and also around the Z-axis.

In the optical sensor 10 of the fifth embodiment, the plurality of secondary shims 16 are respectively interposed at the two distinct locations P21, P22 between the second contact surface 452 of the receiver holder 450 and the second base surface 142 set for the receiver unit 41 to position the receiver unit 41 relative to the sensor base 14 around the X-axis. In addition, the plurality of secondary shims 16 are respectively interposed at the two distinct locations P21, P22 between the second contact surface 452 of the projector holder 220 and the second base surface 142 set for the projector unit 21 to position the projector unit 21 relative to the sensor base 14 around the X-axis.

In the fifth embodiment, the received light virtual axis Vr at the receiver holder 450 is defined to be parallel to both the first contact surface 451 and the second contact surface 452 of the receiver holder 450. In addition, the projected light virtual axis Vp at the projector holder 220 is defined to be parallel to both the first contact surface 451 and the second contact surface 452 of the projector holder 220. Even under these definitions, the orientation angle deviation δp of the projected light optical axis Op relative to the projected light virtual axis Vp and the orientation angle deviation δr of the received light optical axis Or relative to the received light virtual axis Vr in the three-dimensional coordinate system follow those in the first embodiment.

In the product state of the optical sensor 10 according to the fifth embodiment, the adjusted orientation angle θ of the received light optical axis Or in the three-dimensional coordinate system is adjusted to substantially zero (0 degrees) as the angle, at which the received light optical axis Or is aligned along the projected light optical axis Op. Accordingly, the adjusted orientation angle θ of the received light optical axis Or is selected to make the positioning orientation angle ψ of the received light virtual axis Vr substantially coincide with the orientation angle deviation δr of the received light optical axis Or relative to the received light virtual axis Vr in the three-dimensional coordinate system. Furthermore, in the product state of the optical sensor 10 according to the fifth embodiment, the adjusted orientation angle θ of the projected light optical axis Op in the three-dimensional coordinate system is adjusted to substantially zero (0 degrees) as the angle, at which the projected light optical axis Op is aligned along the received light optical axis Or. Accordingly, the adjusted orientation angle θ of the projected light optical axis Op is selected to make the positioning orientation angle ψ of the projected light virtual axis Vp substantially coincide with the orientation angle deviation δp of the projected light optical axis Op relative to the projected light virtual axis Vp in the three-dimensional coordinate system.

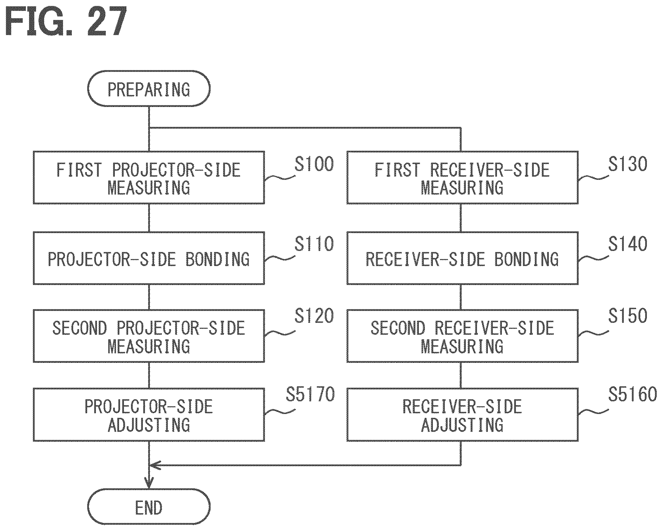

In the manufacturing method of the optical sensor 10 according to the fifth embodiment, the preparing step of S10 is executed in accordance with a preparing subroutine shown in FIG. 27.

In the preparing subroutine of the fifth embodiment, a receiver-side adjusting step of S5160 is executed in the receiver-side sequence instead of S160 of the third embodiment. Specifically, in the receiver-side adjusting step, the orientation angle deviation δr of the received light optical axis Or, which is obtained in S150 of the receiver-side sequence, is retrieved. Accordingly, in the receiver-side adjusting step, the adjusted orientation angle θ is selected to be substantially zero (0 degrees) such that the positioning orientation angle ψ of the received light virtual axis Vr in the three-dimensional coordinate system substantially coincides with the orientation angle deviation δr of the received light optical axis Or. Furthermore, in the receiver-side adjusting step, the individual thicknesses T11, T12, T13 of the primary shims 15 and the individual thicknesses T21, T22 of the secondary shims 16 are determined for the receiver unit 41 so as to achieve the selected adjusted orientation angle θ.

In the preparing subroutine of the fifth embodiment, a projector-side adjusting step of S5170 is executed in the projector-side sequence instead of S4160 of the fourth embodiment. Specifically, in the projector-side adjusting step, the orientation angle deviation δp of the projected light optical axis Op, which is obtained in S120 of the projector-side sequence, is retrieved. Accordingly, in the projector-side adjusting step, the adjusted orientation angle θ is selected to be substantially zero (0 degrees) such that the positioning orientation angle ψ of the projected light virtual axis Vp in the three-dimensional coordinate system substantially coincides with the orientation angle deviation δp of the projected light optical axis Op. Furthermore, in the receiver-side adjusting step, the individual thicknesses T11, T12, T13 of the primary shims 15 and the individual thicknesses T21, T22 of the secondary shims 16 are determined for the projector unit 21 so as to achieve the selected adjusted orientation angle θ.

In the above fifth embodiment, S20 to S50 following S10 of the preparing subroutine are executed as in the first embodiment. As a result, in S20 to S40 for the receiver unit 41, the primary shims 15 and the secondary shims 16, each of which has the corresponding thickness that corresponds to the adjusted orientation angle θ determined in S5160, are interposed and screw-fastened such that each of the primary shims 15 is interposed and screw-fastened between the first base surface 141 and the first contact surface 451, and each of the secondary shims 16 is interposed and screw-fastened between the second base surface 142 and the second contact surface 452. In addition, in S20 to S40 for the projector unit 21, the primary shims 15 and the secondary shims 16, each of which has the corresponding thickness that corresponds to the adjusted orientation angle θ determined in S5170, are interposed and screw-fastened such that each of the primary shims 15 is interposed and screw-fastened between the first base surface 141 and the first contact surface 451, and each of the secondary shims 16 is interposed and screw-fastened between the second base surface 142 and the second contact surface 452. Here, the execution of S50 is omitted in the fifth embodiment described above.

According to the fifth embodiment described above, the positioning orientation angle ψ and either the orientation angle deviation δp or the orientation angle deviation δr coincide with each other, and thereby the orientation of the projected light optical axis Op and the orientation of the received light optical axis Or can be geometrically adjusted with high precision relative to each other. This ensures the accuracy of optical axis adjustment between the projector unit 21 and the receiver unit 41. Furthermore, in addition to the actions and advantages of coinciding the angles described above, the other actions and advantages of the first embodiment, and the other actions and advantages, which are achieved by interchanging "light projection (projector-side)" and "light reception (receiver-side)" according to the first embodiment, can also be achieved.

### (Other Embodiments)

The embodiments have been explained above. However, the present disclosure is not limited to these embodiments and can be applied to various other embodiments and combinations without departing from the spirit and scope of the present disclosure.

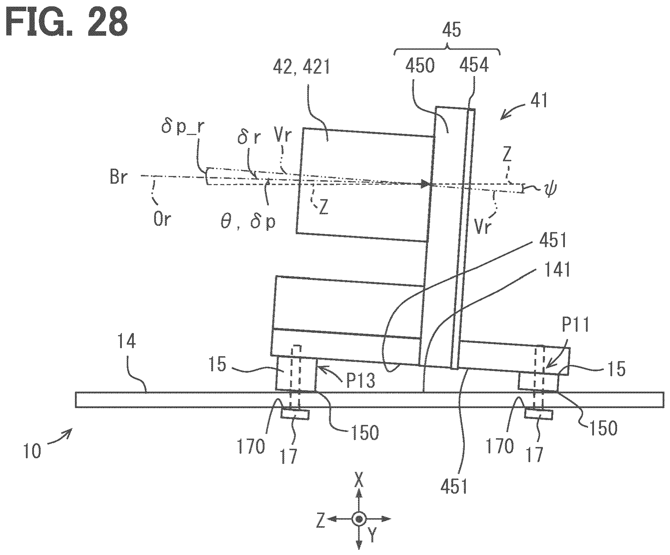

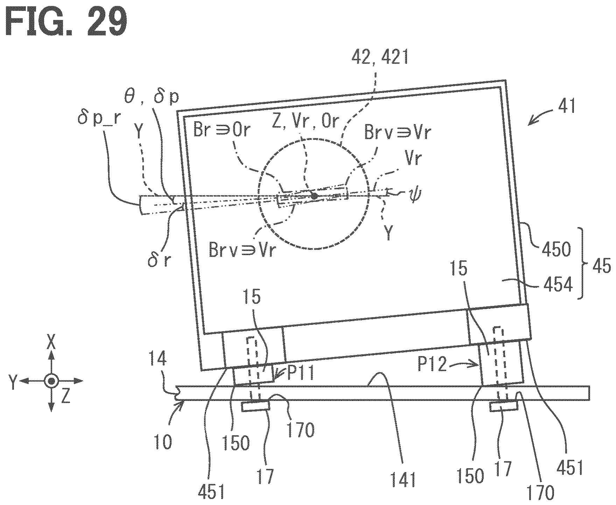

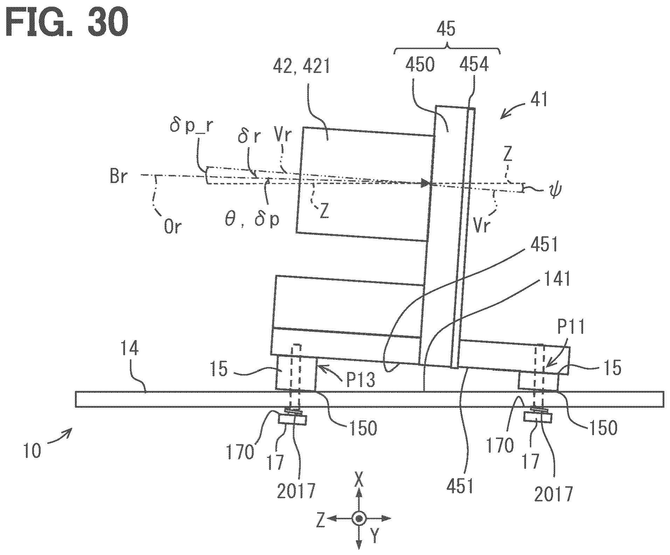

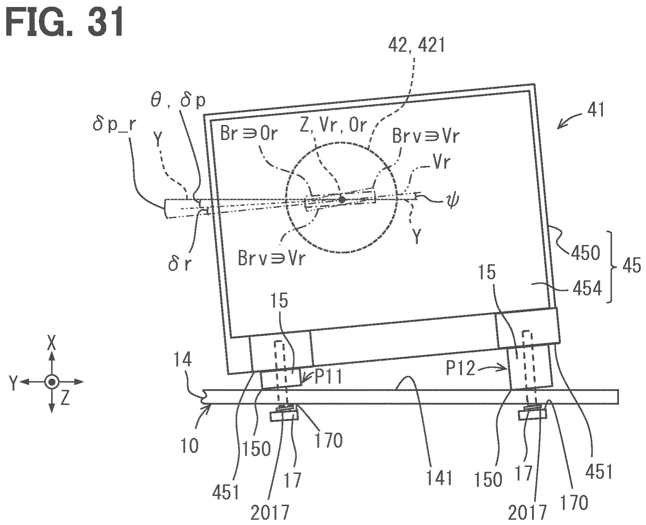

As shown in FIGS. 28 to 31, in modifications, each of the primary shims 15 may be brought into contact with the first base surface 141 such that a corner portion 150 of the end surface of the primary shim 15, which is opposite to the first contact surface 451 that is in surface contact with the primary shim 15, is in contact with the first base surface 141. In the modification shown in FIGS. 28 and 29, each of the primary fixing screws 17 may be brought into contact with the opposite surface of the sensor base 14, which is opposite to the primary shim 15, such that the corner portion 170 of the end surface of the head of the primary fixing screw 17, which faces the shaft portion of the primary fixing screw 17, is in contact with the opposite surface of the sensor base 14, which is opposite to the primary shim 15. Furthermore, in the modification shown in FIGS. 30 and 31, the spring washer 2017, which is used in the same manner as in the second embodiment, may be clamped between the head of the primary fixing screw 17 and the sensor base 14.

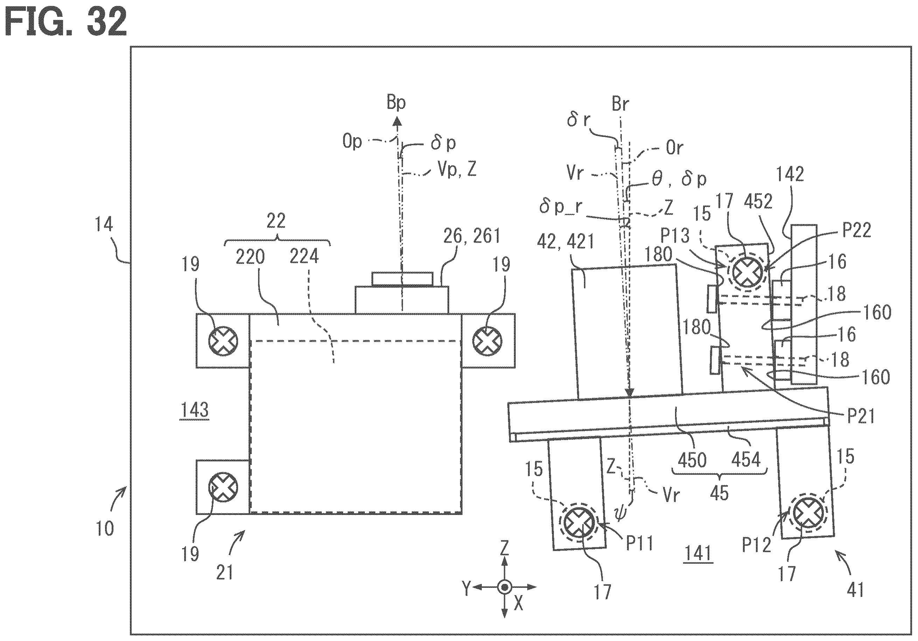

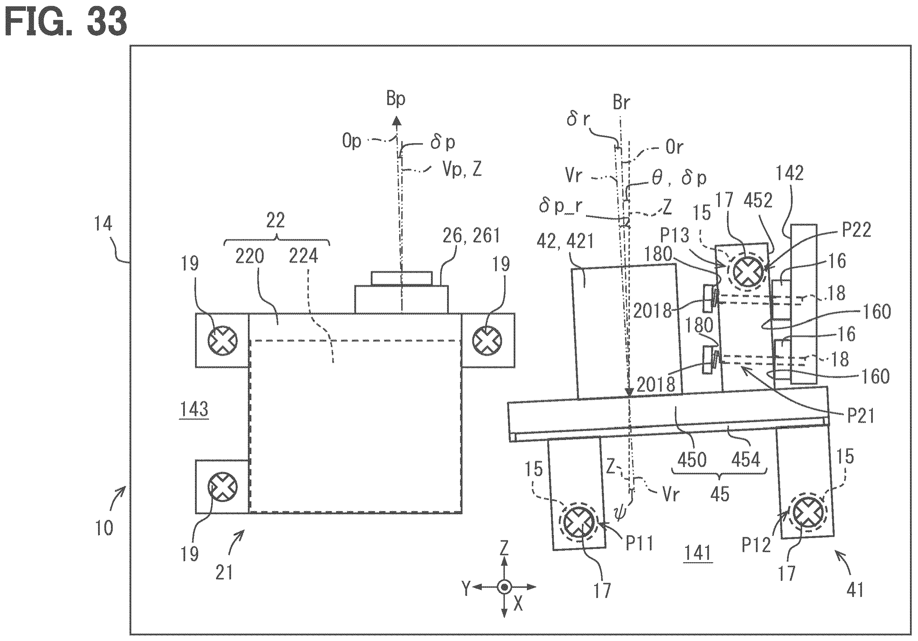

As shown in FIGS. 32 and 33, in the modification, each of the secondary shims 16 may be brought into contact with the second contact surface 452 such that a corner portion 160 of the secondary shim 16, which is opposite to the second base surface 142 that is in surface contact with the secondary shim 16, is in contact with the second contact surface 452. In the modification shown in FIGS. 32 and 33, each of the secondary fixing screws 18 may be brought into contact with the opposite surface of the receiver holder 450, which is opposite to the secondary shim 16, such that the corner portion 180 of the end surface of the head of the secondary fixing screw 18, which faces the shaft portion of the secondary fixing screw 18, is in contact with the opposite surface of the receiver holder 450, which is opposite to the secondary shim 16. Furthermore, in the modification shown in FIG. 33, the spring washer 2018, which is used in the same manner as in the second embodiment, may be clamped between the head of the secondary fixing screw 18 and the receiver holder 450 of the receiver unit 41.

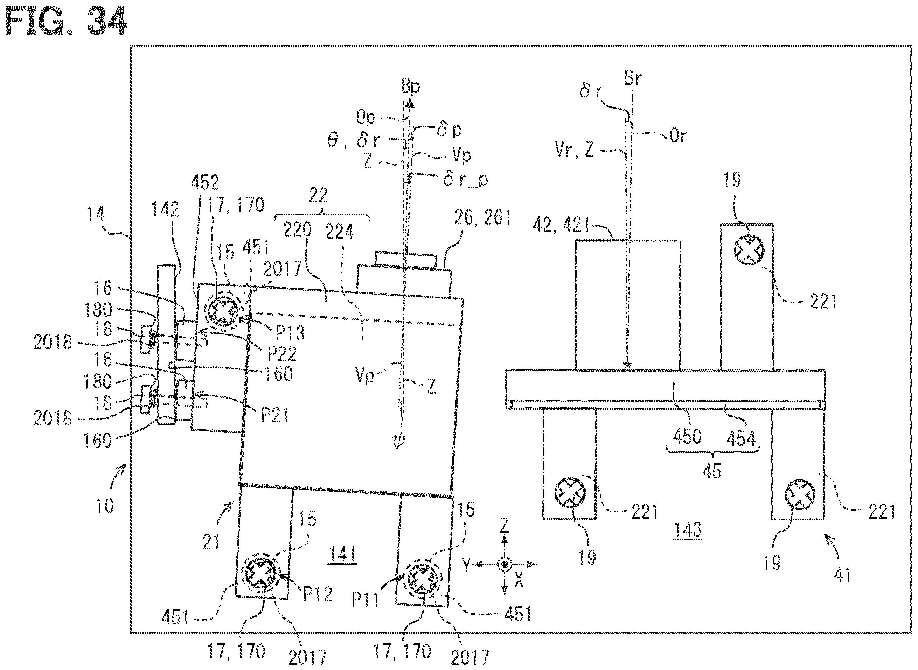

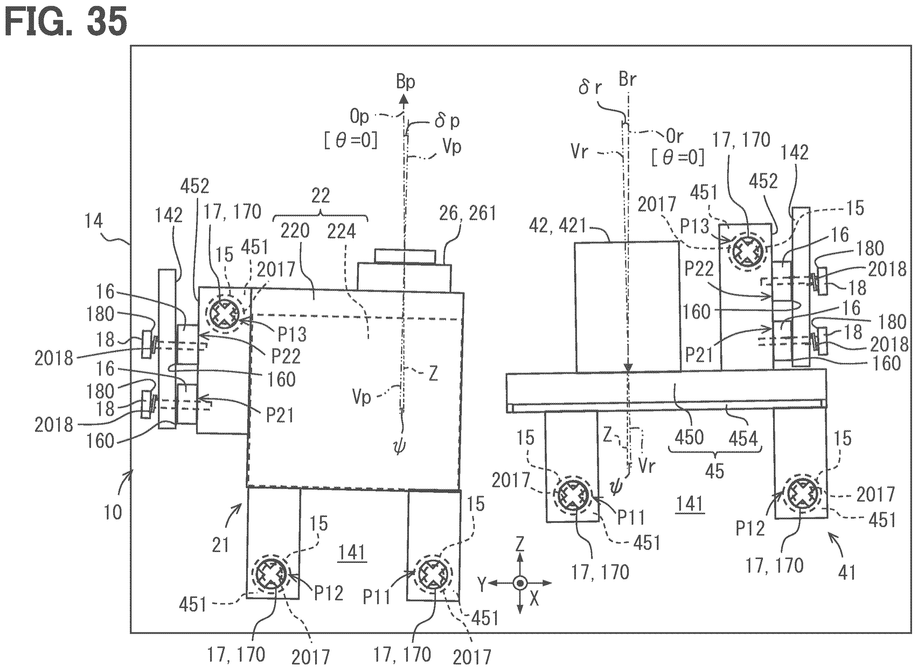

The spring washers 2017, 2018 described in the second embodiment or described in each modification described above may also be applied to any one of the third to fifth embodiments. Here, FIG. 34 illustrates an example in which the spring washers 2017, 2018 are applied to the fourth embodiment, and FIG. 35 illustrates an example in which the spring washers 2017, 2018 are applied to the fifth embodiment.

In another modification, the execution order of S30 and S40 may be reversed. In S30 of the modification, the primary shims 15 may be sequentially screw-fastened in descending order of thickness with respect to the thicknesses of the primary shims 15 starting with one of the primary shims 15, which has a largest thickness among the primary shims 15. In S40 of the modification, the secondary shims 16 may be sequentially screw-fastened in descending order of thickness with respect to the thicknesses of the secondary shims 16 starting with one of the secondary shims 16, which has a largest thickness among the secondary shims 16.

In another modification, instead of the shims 15, 16, orientation adjusting members, such as spring screws may be used to adjust the orientation of the unit 21 and/or the orientation of the unit 41. Even in this case, the orientation adjustment, which is similar to any one of the third to fifth embodiments, remains effective.

In another modification, the axial direction of the Y-axis being parallel to the horizontal direction and the axial direction of the X-axis being parallel to the vertical direction may be defined. In another modification, the moving object to which the optical sensor 10 is applied may be, for example, a traveling robot whose movement can be remotely controlled. In another modification, the application subject installed with the optical sensor 10 may be, for example, a stationary structure besides the moving object.

### (Addendum)

This specification discloses a plurality of technical aspects enumerated below, as well as various combinations thereof.

### (Technical Aspect 1)

According to technical aspect 1, there is provided an optical sensor (10) that is configured to detect an external environment by projecting a projection beam (Bp) toward the external environment and receiving a reflection beam (Br) which is reflected from the external environment in response to the projection beam, wherein a three-dimensional coordinate system with an X-axis, a Y-axis and a Z-axis is defined in the optical sensor, the optical sensor including:
a sensor base (14) that forms a first base surface (141), which is parallel to a Y-Z plane of the three-dimensional coordinate system, and a second base surface (142), which is parallel to an X-Z plane of the three-dimensional coordinate system;
a receiver unit (41) that is fixed to the sensor base and is configured to receive the reflection beam along a received light optical axis (Or), an orientation of which is adjusted in the three-dimensional coordinate system;
a plurality of primary shims (15) that are respectively positioned at three distinct locations (P11, P12, P13) which are set to position the receiver unit relative to the sensor base around the Y-axis and also around the Z-axis; and
a plurality of secondary shims (16) that are respectively positioned at two distinct locations (P21, P22) which are set to position the receiver unit relative to the sensor base around the X-axis, wherein:
   each of the plurality of primary shims has a thickness individually set based on an adjusted orientation angle (θ) of the received light optical axis in the three-dimensional coordinate system and is thereby screw-fastened between a first contact surface (451) of the receiver unit and the first base surface in a state where a corner portion (150) of each of the plurality of primary shims is in contact with one of the first contact surface and the first base surface; and
   each of the plurality of secondary shims has a thickness individually set based on the adjusted orientation angle of the received light optical axis in the three-dimensional coordinate system and is thereby screw-fastened between a second contact surface (452) of the receiver unit and the second base surface in a state where a corner portion (160) of each of the plurality of secondary shims is in contact with one of the second contact surface and the second base surface, wherein the second contact surface is perpendicular to the first contact surface.

### (Technical Aspect 2)

According to technical aspect 2, there is provided the optical sensor according to technical aspect 1, there is provided , wherein the plurality of primary shims and the plurality of secondary shims are respectively screw-fastened by a corresponding one of a plurality of fixing screws (17, 18), each of which is configured to fix the receiver unit to the sensor base and is individually assigned to a corresponding one of the plurality of primary shims and the plurality of secondary shims, in a state where a corner portion (170, 180) of a head of the corresponding one of the plurality of fixing screws is in contact with either the receiver unit or the sensor base.

### (Technical Aspect 3)

According to technical aspect 3, there is provided the optical sensor according to technical aspect 1, wherein the plurality of primary shims and the plurality of secondary shims are respectively screw-fastened by a corresponding one of a plurality of fixing screws (17, 18), each of which is configured to fix the receiver unit to the sensor base and is individually assigned to a corresponding one of the plurality of primary shims and the plurality of secondary shims, in a state where a corresponding one of a plurality of spring washers (2017, 2018) is clamped between a head of the corresponding one of the plurality of fixing screws and either the receiver unit or the sensor base.

### (Technical Aspect 4)

According to technical aspect 4, there is provided the optical sensor according to any one of technical aspects 1 to 3, including a projector unit (21) that is fixed to the sensor base and is configured to guide the projection beam along a projected light optical axis (Op), wherein:
the thickness of each of the plurality of primary shims and the thickness of each of the plurality of secondary shims are set based on the adjusted orientation angle, at which the received light optical axis is aligned along the projected light optical axis.

### (Technical Aspect 5)

According to technical aspect 5, there is provided the optical sensor according to technical aspect 4, wherein:
a projected light virtual axis (Vp), which is parallel to the Z-axis, is assumed in the projector unit, and a received light virtual axis (Vr), which is parallel to both the first contact surface and the second contact surface, is assumed in the receiver unit; and
the thickness of each of the plurality of primary shims and the thickness of each of the plurality of secondary shims are set based on the adjusted orientation angle that makes a positioning orientation angle (ψ) of the received light virtual axis coincide with a relative error (δp_r) between an orientation angle deviation (δp) of the projected light optical axis relative to the projected light virtual axis and an orientation angle deviation (δr) of the received light optical axis relative to the received light virtual axis in the three-dimensional coordinate system.

### (Technical Aspect 6)

According to technical aspect 6, there is provided the optical sensor according to any one of technical aspects 1 to 4, wherein:
a received light virtual axis (Vr), which is parallel to both the first contact surface and the second contact surface, is assumed in the receiver unit; and
the thickness of each of the plurality of primary shims and the thickness of each of the plurality of secondary shims are set based on the adjusted orientation angle that makes a positioning orientation angle (ψ) of the received light virtual axis coincide with an orientation angle deviation (δr) of the received light optical axis relative to the received light virtual axis in the three-dimensional coordinate system.

### (Technical Aspect 7)

According to technical aspect 7, there is provided an optical sensor (10) that is configured to detect an external environment by projecting a projection beam (Bp) toward the external environment and receiving a reflection beam (Br) which is reflected from the external environment in response to the projection beam, wherein a three-dimensional coordinate system with an X-axis, a Y-axis and a Z-axis is defined in the optical sensor, the optical sensor including:
a sensor base (14) that forms a first base surface (141), which is parallel to a Y-Z plane of the three-dimensional coordinate system, and a second base surface (142), which is parallel to an X-Z plane of the three-dimensional coordinate system;
a projector unit (21) that is fixed to the sensor base and is configured to guide the projection beam along a projected light optical axis (Op);
a plurality of primary shims (15) that are respectively positioned at three distinct locations (P11, P12, P13) which are set to position the projector unit relative to the sensor base around the Y-axis and also around the Z-axis; and
a plurality of secondary shims (16) that are respectively positioned at two distinct locations (P21, P22) which are set to position the projector unit relative to the sensor base around the X-axis, wherein:
   each of the plurality of primary shims has a thickness individually set based on an adjusted orientation angle (θ) of the projected light optical axis in the three-dimensional coordinate system and is thereby screw-fastened between a first contact surface (451) of the projector unit and the first base surface in a state where a corner portion (150) of each of the plurality of primary shims is in contact with one of the first contact surface and the first base surface; and
   each of the plurality of secondary shims has a thickness individually set based on the adjusted orientation angle of the projected light optical axis in the three-dimensional coordinate system and is thereby screw-fastened between a second contact surface (452) of the projector unit and the second base surface in a state where a corner portion (160) of each of the plurality of secondary shims is in contact with one of the second contact surface and the second base surface, wherein the second contact surface is perpendicular to the first contact surface.

### (Technical Aspect 8)

According to technical aspect 8, there is provided the optical sensor according to technical aspect 7, wherein the plurality of primary shims and the plurality of secondary shims are respectively screw-fastened by a corresponding one of a plurality of fixing screws (17, 18), each of which is configured to fix the projector unit to the sensor base and is individually assigned to a corresponding one of the plurality of primary shims and the plurality of secondary shims, in a state where a corner portion (170, 180) of a head of the corresponding one of the plurality of fixing screws is in contact with either the projector unit or the sensor base.

### (Technical Aspect 9)

According to technical aspect 9, there is provided the optical sensor according to technical aspect 7, wherein the plurality of primary shims and the plurality of secondary shims are respectively screw-fastened by a corresponding one of a plurality of fixing screws (17, 18), each of which is configured to fix the projector unit to the sensor base and is individually assigned to a corresponding one of the plurality of primary shims and the plurality of secondary shims, in a state where a corresponding one of a plurality of spring washers (2017, 2018) is clamped between a head of the corresponding one of the plurality of fixing screws and either the projector unit or the sensor base.

### (Technical Aspect 10)

According to technical aspect 10, there is provided the optical sensor according to any one of technical aspects 7 to 9, including a receiver unit (41) that is fixed to the sensor base and is configured to receive the reflection beam along a received light optical axis (Or), an orientation of which is adjusted in the three-dimensional coordinate system, wherein:
the thickness of each of the plurality of primary shims and the thickness of each of the plurality of secondary shims are set based on the adjusted orientation angle, at which the projected light optical axis is aligned along the received light optical axis.

### (Technical Aspect 11)

According to technical aspect 11, there is provided the optical sensor according to technical aspect 10, wherein:
a projected light virtual axis (Vp), which is parallel to both the first contact surface and the second contact surface, is assumed in the projector unit, and a received light virtual axis (Vr), which is parallel to the Z-axis, is assumed in the receiver unit; and
the thickness of each of the plurality of primary shims and the thickness of each of the plurality of secondary shims are set based on the adjusted orientation angle that makes a positioning orientation angle (ψ) of the projected light virtual axis coincide with a relative error (δp_r) between an orientation angle deviation (δr) of the received light optical axis relative to the received light virtual axis and an orientation angle deviation (δp) of the projected light optical axis relative to the projected light virtual axis in the three-dimensional coordinate system.

### (Technical Aspect 12)

According to technical aspect 12, there is provided the optical sensor according to any one of technical aspects 7 to 10, wherein:
a projected light virtual axis (Vp), which is parallel to both the first contact surface and the second contact surface, is assumed in the projector unit; and
the thickness of each of the plurality of primary shims and the thickness of each of the plurality of secondary shims are set based on the adjusted orientation angle that makes a positioning orientation angle (ψ) of the projected light virtual axis coincide with an orientation angle deviation (δp) of the projected light optical axis relative to the projected light virtual axis in the three-dimensional coordinate system.

### (Technical Aspect 13)

According to technical aspect 13, there is provided a manufacturing method for manufacturing the optical sensor (10) of any one of technical aspects 1 to 12, the manufacturing method including:
interposing each of the plurality of primary shims between the first base surface and the first contact surface, and each of the plurality of secondary shims between the second base surface and the second contact surface, wherein the thickness of each of the plurality of primary shims and the thickness of each of the plurality of secondary shims are set based on the adjusted orientation angle in the three-dimensional coordinate system; and
screw-fastening each of the plurality of primary shims between the first base surface and the first contact surface, and thereafter screw-fastening each of the plurality of secondary shims between the second base surface and the second contact surface.

### (Technical Aspect 14)

According to technical aspect 14, there is provided the manufacturing method according to technical aspect 13, wherein:
the screw-fastening of each of the plurality of primary shims between the first base surface and the first contact surface includes:
   sequentially screw-fastening the plurality of primary shims in ascending order of thickness with respect to the thicknesses of the plurality of primary shims starting with one of the plurality of primary shims, which has a smallest thickness among the plurality of primary shims; and
the screw-fastening of each of the plurality of secondary shims between the second base surface and the second contact surface includes:
   sequentially screw-fastening the plurality of secondary shims in ascending order of thickness with respect to the thicknesses of the plurality of secondary shims starting with one of the plurality of secondary shims, which has a smallest thickness among the plurality of secondary shims.

### (Technical Aspect 15)

According to technical aspect 15, there is provided a manufacturing method for manufacturing the optical sensor (10) of technical aspect 5, the manufacturing method including:
measuring a projected light focusing angle (ωp), which is an angle defined by the projected light optical axis relative to the projected light virtual axis, in a focused state of the projection beam;
bonding a projector lens module (26) to a projector light source module (22) via a projector adhesive (210) in the projector unit, wherein the projector lens module is configured to guide the projection beam, which is projected from the projector light source module, to the external environment along the projected light optical axis;
measuring a projected light error angle (ρp) occurring in the projected light optical axis of the projector lens module in the three-dimensional coordinate system, after the projector lens module is bonded to the projector light source module by curing the projector adhesive;
measuring a received light focusing angle (wr), which is an angle defined by the received light optical axis relative to the received light virtual axis, in a focused state of the reflection beam;
bonding a receiver lens module (42) to a receiver photodetector module (45) via a receiver adhesive (410) in the receiver unit, wherein the receiver lens module is configured to guide the reflection beam, which is received from the external environment, to the receiver photodetector module along the received light optical axis, so that the receiver photodetector module receives the reflection beam from the external environment to detect the external environment;
measuring a received light error angle (ρr) occurring in the received light optical axis of the receiver lens module in the three-dimensional coordinate system, after the receiver lens module is bonded to the receiver photodetector module by curing the receiver adhesive;
fixing the projector unit to the sensor base; and
   interposing and screw-fastening each of the plurality of primary shims between the first base surface and the first contact surface, and each of the plurality of secondary shims between the second base surface and the second contact surface, wherein the thickness of each of the plurality of primary shims and the thickness of each of the plurality of secondary shims are set based on the adjusted orientation angle that makes the positioning orientation angle (ψ) of the received light virtual axis coincide with the relative error (δp_r) between the orientation angle deviation (δp) of the projected light optical axis relative to the projected light virtual axis and the orientation angle deviation (δr) of the received light optical axis relative to the received light virtual axis in the three-dimensional coordinate system, wherein the orientation angle deviation of the projected light optical axis is defined as a sum of the projected light focusing angle and the projected light error angle, and the orientation angle deviation of the received light optical axis is defined as a sum of the received light focusing angle and the received light error angle.

### (Technical Aspect 16)

According to technical aspect 16, there is provided a manufacturing method for manufacturing the optical sensor (10) of technical aspect 6, the manufacturing method including:
measuring a received light focusing angle (wr), which is an angle defined by the received light optical axis relative to the received light virtual axis, in a focused state of the reflection beam;
bonding a receiver lens module (42) to a receiver photodetector module (45) via a receiver adhesive (410) in the receiver unit, wherein the receiver lens module is configured to guide the reflection beam, which is received from the external environment, to the receiver photodetector module along the received light optical axis, so that the receiver photodetector module receives the reflection beam from the external environment to detect the external environment;
measuring a received light error angle (ρr) occurring in the received light optical axis of the receiver lens module in the three-dimensional coordinate system, after the receiver lens module is bonded to the receiver photodetector module by curing the receiver adhesive; and
interposing and screw-fastening each of the plurality of primary shims between the first base surface and the first contact surface, and each of the plurality of secondary shims between the second base surface and the second contact surface, wherein the thickness of each of the plurality of primary shims and the thickness of each of the plurality of secondary shims are set based on the adjusted orientation angle that makes the positioning orientation angle (ψ) of the received light virtual axis coincide with the orientation angle deviation (δr) of the received light optical axis relative to the received light virtual axis in the three-dimensional coordinate system, wherein the orientation angle deviation of the received light optical axis is defined as a sum of the received light focusing angle and the received light error angle.

### (Technical Aspect 17)

According to technical aspect 17, there is provided a manufacturing method for manufacturing the optical sensor (10) of technical aspect 11, the manufacturing method including:
measuring a projected light focusing angle (ωp), which is an angle defined by the projected light optical axis relative to the projected light virtual axis, in a focused state of the projection beam;
bonding a projector lens module (26) to a projector light source module (22) via a projector adhesive (210) in the projector unit, wherein the projector lens module is configured to guide the projection beam, which is projected from the projector light source module, to the external environment along the projected light optical axis;
measuring a projected light error angle (ρp) occurring in the projected light optical axis of the projector lens module in the three-dimensional coordinate system, after the projector lens module is bonded to the projector light source module by curing the projector adhesive;
measuring a received light focusing angle (wr), which is an angle defined by the received light optical axis relative to the received light virtual axis, in a focused state of the reflection beam;
bonding a receiver lens module (42) to a receiver photodetector module (45) via a receiver adhesive (410) in the receiver unit, wherein the receiver lens module is configured to guide the reflection beam, which is received from the external environment, to the receiver photodetector module along the received light optical axis, so that the receiver photodetector module receives the reflection beam from the external environment to detect the external environment;
measuring a received light error angle (ρr) occurring in the received light optical axis of the receiver lens module in the three-dimensional coordinate system, after the receiver lens module is bonded to the receiver photodetector module by curing the receiver adhesive;
fixing the receiver unit to the sensor base; and
interposing and screw-fastening each of the plurality of primary shims between the first base surface and the first contact surface, and each of the plurality of secondary shims between the second base surface and the second contact surface, wherein the thickness of each of the plurality of primary shims and the thickness of each of the plurality of secondary shims are set based on the adjusted orientation angle that makes the positioning orientation angle (ψ) of the projected light virtual axis coincide with the relative error (δr_p) between the orientation angle deviation (δr) of the received light optical axis relative to the received light virtual axis and the orientation angle deviation (δp) of the projected light optical axis relative to the projected light virtual axis in the three-dimensional coordinate system, wherein the orientation angle deviation of the projected light optical axis is defined as a sum of the projected light focusing angle and the projected light error angle, and the orientation angle deviation of the received light optical axis is defined as a sum of the received light focusing angle and the received light error angle.

### (Technical Aspect 18)

According to technical aspect 18, there is provided a manufacturing method for manufacturing the optical sensor (10) of technical aspect 12, the manufacturing method including:
measuring a projected light focusing angle (ωp), which is an angle defined by the projected light optical axis relative to the projected light virtual axis, in a focused state of the projection beam;
bonding a projector lens module (26) to a projector light source module (22) via a projector adhesive (210) in the projector unit, wherein the projector lens module is configured to guide the projection beam, which is projected from the projector light source module, to the external environment along the projected light optical axis;
measuring a projected light error angle (ρp) occurring in the projected light optical axis of the projector lens module in the three-dimensional coordinate system, after the projector lens module is bonded to the projector light source module by curing the projector adhesive; and
interposing and screw-fastening each of the plurality of primary shims between the first base surface and the first contact surface, and each of the plurality of secondary shims between the second base surface and the second contact surface, wherein the thickness of each of the plurality of primary shims and the thickness of each of the plurality of secondary shims are set based on the adjusted orientation angle that makes the positioning orientation angle (ψ) of the projected light virtual axis coincide with the orientation angle deviation (δp) of the projected light optical axis relative to the projected light virtual axis in the three-dimensional coordinate system, wherein the orientation angle deviation of the projected light optical axis is defined as a sum of the projected light focusing angle and the projected light error angle.

## Claims

1. An optical sensor (10) that is configured to detect an external environment by projecting a projection beam (Bp) toward the external environment and receiving a reflection beam (Br) which is reflected from the external environment in response to the projection beam, wherein a three-dimensional coordinate system with an X-axis, a Y-axis and a Z-axis is defined in the optical sensor, the optical sensor comprising:
a sensor base (14) that forms a first base surface (141), which is parallel to a Y-Z plane of the three-dimensional coordinate system, and a second base surface (142), which is parallel to an X-Z plane of the three-dimensional coordinate system;
a receiver unit (41) that is fixed to the sensor base and is configured to receive the reflection beam along a received light optical axis (Or), an orientation of which is adjusted in the three-dimensional coordinate system;
a plurality of primary shims (15) that are respectively positioned at three distinct locations (P11, P12, P13) which are set to position the receiver unit relative to the sensor base around the Y-axis and also around the Z-axis; and
a plurality of secondary shims (16) that are respectively positioned at two distinct locations (P21, P22) which are set to position the receiver unit relative to the sensor base around the X-axis, wherein:
each of the plurality of primary shims has a thickness individually set based on an adjusted orientation angle (θ) of the received light optical axis in the three-dimensional coordinate system and is thereby screw-fastened between a first contact surface (451) of the receiver unit and the first base surface in a state where a corner portion (150) of each of the plurality of primary shims is in contact with one of the first contact surface and the first base surface; and
each of the plurality of secondary shims has a thickness individually set based on the adjusted orientation angle of the received light optical axis in the three-dimensional coordinate system and is thereby screw-fastened between a second contact surface (452) of the receiver unit and the second base surface in a state where a corner portion (160) of each of the plurality of secondary shims is in contact with one of the second contact surface and the second base surface, wherein the second contact surface is perpendicular to the first contact surface.

2. The optical sensor according to claim 1, wherein the plurality of primary shims and the plurality of secondary shims are respectively screw-fastened by a corresponding one of a plurality of fixing screws (17, 18), each of which is configured to fix the receiver unit to the sensor base and is individually assigned to a corresponding one of the plurality of primary shims and the plurality of secondary shims, in a state where a corner portion (170, 180) of a head of the corresponding one of the plurality of fixing screws is in contact with either the receiver unit or the sensor base.

3. The optical sensor according to claim 1, wherein the plurality of primary shims and the plurality of secondary shims are respectively screw-fastened by a corresponding one of a plurality of fixing screws (17, 18), each of which is configured to fix the receiver unit to the sensor base and is individually assigned to a corresponding one of the plurality of primary shims and the plurality of secondary shims, in a state where a corresponding one of a plurality of spring washers (2017, 2018) is clamped between a head of the corresponding one of the plurality of fixing screws and either the receiver unit or the sensor base.

4. The optical sensor according to claim 1, comprising a projector unit (21) that is fixed to the sensor base and is configured to guide the projection beam along a projected light optical axis (Op), wherein:
the thickness of each of the plurality of primary shims and the thickness of each of the plurality of secondary shims are set based on the adjusted orientation angle, at which the received light optical axis is aligned along the projected light optical axis.

5. The optical sensor according to claim 4, wherein:
a projected light virtual axis (Vp), which is parallel to the Z-axis, is assumed in the projector unit, and a received light virtual axis (Vr), which is parallel to both the first contact surface and the second contact surface, is assumed in the receiver unit; and
the thickness of each of the plurality of primary shims and the thickness of each of the plurality of secondary shims are set based on the adjusted orientation angle that makes a positioning orientation angle (ψ) of the received light virtual axis coincide with a relative error (δp_r) between an orientation angle deviation (δp) of the projected light optical axis relative to the projected light virtual axis and an orientation angle deviation (δr) of the received light optical axis relative to the received light virtual axis in the three-dimensional coordinate system.

6. The optical sensor according to claim 1, wherein:
a received light virtual axis (Vr), which is parallel to both the first contact surface and the second contact surface, is assumed in the receiver unit; and
the thickness of each of the plurality of primary shims and the thickness of each of the plurality of secondary shims are set based on the adjusted orientation angle that makes a positioning orientation angle (ψ) of the received light virtual axis coincide with an orientation angle deviation (δr) of the received light optical axis relative to the received light virtual axis in the three-dimensional coordinate system.

7. An optical sensor (10) that is configured to detect an external environment by projecting a projection beam (Bp) toward the external environment and receiving a reflection beam (Br) which is reflected from the external environment in response to the projection beam, wherein a three-dimensional coordinate system with an X-axis, a Y-axis and a Z-axis is defined in the optical sensor, the optical sensor comprising:
a sensor base (14) that forms a first base surface (141), which is parallel to a Y-Z plane of the three-dimensional coordinate system, and a second base surface (142), which is parallel to an X-Z plane of the three-dimensional coordinate system;
a projector unit (21) that is fixed to the sensor base and is configured to guide the projection beam along a projected light optical axis (Op);
a plurality of primary shims (15) that are respectively positioned at three distinct locations (P11, P12, P13) which are set to position the projector unit relative to the sensor base around the Y-axis and also around the Z-axis; and
a plurality of secondary shims (16) that are respectively positioned at two distinct locations (P21, P22) which are set to position the projector unit relative to the sensor base around the X-axis, wherein:
each of the plurality of primary shims has a thickness individually set based on an adjusted orientation angle (θ) of the projected light optical axis in the three-dimensional coordinate system and is thereby screw-fastened between a first contact surface (451) of the projector unit and the first base surface in a state where a corner portion (150) of each of the plurality of primary shims is in contact with one of the first contact surface and the first base surface; and
each of the plurality of secondary shims has a thickness individually set based on the adjusted orientation angle of the projected light optical axis in the three-dimensional coordinate system and is thereby screw-fastened between a second contact surface (452) of the projector unit and the second base surface in a state where a corner portion (160) of each of the plurality of secondary shims is in contact with one of the second contact surface and the second base surface, wherein the second contact surface is perpendicular to the first contact surface.

8. The optical sensor according to claim 7, wherein the plurality of primary shims and the plurality of secondary shims are respectively screw-fastened by a corresponding one of a plurality of fixing screws (17, 18), each of which is configured to fix the projector unit to the sensor base and is individually assigned to a corresponding one of the plurality of primary shims and the plurality of secondary shims, in a state where a corner portion (170, 180) of a head of the corresponding one of the plurality of fixing screws is in contact with either the projector unit or the sensor base.

9. The optical sensor according to claim 7, wherein the plurality of primary shims and the plurality of secondary shims are respectively screw-fastened by a corresponding one of a plurality of fixing screws (17, 18), each of which is configured to fix the projector unit to the sensor base and is individually assigned to a corresponding one of the plurality of primary shims and the plurality of secondary shims, in a state where a corresponding one of a plurality of spring washers (2017, 2018) is clamped between a head of the corresponding one of the plurality of fixing screws and either the projector unit or the sensor base.

10. The optical sensor according to claim 7, comprising a receiver unit (41) that is fixed to the sensor base and is configured to receive the reflection beam along a received light optical axis (Or), an orientation of which is adjusted in the three-dimensional coordinate system, wherein:
the thickness of each of the plurality of primary shims and the thickness of each of the plurality of secondary shims are set based on the adjusted orientation angle, at which the projected light optical axis is aligned along the received light optical axis.

11. The optical sensor according to claim 10, wherein:
a projected light virtual axis (Vp), which is parallel to both the first contact surface and the second contact surface, is assumed in the projector unit, and a received light virtual axis (Vr), which is parallel to the Z-axis, is assumed in the receiver unit; and
the thickness of each of the plurality of primary shims and the thickness of each of the plurality of secondary shims are set based on the adjusted orientation angle that makes a positioning orientation angle (ψ) of the projected light virtual axis coincide with a relative error (δp_r) between an orientation angle deviation (δr) of the received light optical axis relative to the received light virtual axis and an orientation angle deviation (δp) of the projected light optical axis relative to the projected light virtual axis in the three-dimensional coordinate system.

12. The optical sensor according to claim 7, wherein:
a projected light virtual axis (Vp), which is parallel to both the first contact surface and the second contact surface, is assumed in the projector unit; and
the thickness of each of the plurality of primary shims and the thickness of each of the plurality of secondary shims are set based on the adjusted orientation angle that makes a positioning orientation angle (ψ) of the projected light virtual axis coincide with an orientation angle deviation (δp) of the projected light optical axis relative to the projected light virtual axis in the three-dimensional coordinate system.

13. A manufacturing method for manufacturing the optical sensor (10) of any one of claims 1 to 12, the manufacturing method comprising:
interposing each of the plurality of primary shims between the first base surface and the first contact surface, and each of the plurality of secondary shims between the second base surface and the second contact surface, wherein the thickness of each of the plurality of primary shims and the thickness of each of the plurality of secondary shims are set based on the adjusted orientation angle **in** the three-dimensional coordinate system; and
screw-fastening each of the plurality of primary shims between the first base surface and the first contact surface, and thereafter screw-fastening each of the plurality of secondary shims between the second base surface and the second contact surface.

14. The manufacturing method according to claim 13, wherein:
the screw-fastening of each of the plurality of primary shims between the first base surface and the first contact surface includes:
sequentially screw-fastening the plurality of primary shims in ascending order of thickness with respect to the thicknesses of the plurality of primary shims starting with one of the plurality of primary shims, which has a smallest thickness among the plurality of primary shims; and
the screw-fastening of each of the plurality of secondary shims between the second base surface and the second contact surface includes:
sequentially screw-fastening the plurality of secondary shims in ascending order of thickness with respect to the thicknesses of the plurality of secondary shims starting with one of the plurality of secondary shims, which has a smallest thickness among the plurality of secondary shims.

15. A manufacturing method for manufacturing the optical sensor (10) of claim 5, the manufacturing method comprising:
measuring a projected light focusing angle (ωp), which is an angle defined by the projected light optical axis relative to the projected light virtual axis, in a focused state of the projection beam;
bonding a projector lens module (26) to a projector light source module (22) via a projector adhesive (210) in the projector unit, wherein the projector lens module is configured to guide the projection beam, which is projected from the projector light source module, to the external environment along the projected light optical axis;
measuring a projected light error angle (ρp) occurring in the projected light optical axis of the projector lens module in the three-dimensional coordinate system, after the projector lens module is bonded to the projector light source module by curing the projector adhesive;
measuring a received light focusing angle (wr), which is an angle defined by the received light optical axis relative to the received light virtual axis, in a focused state of the reflection beam;
bonding a receiver lens module (42) to a receiver photodetector module (45) via a receiver adhesive (410) in the receiver unit, wherein the receiver lens module is configured to guide the reflection beam, which is received from the external environment, to the receiver photodetector module along the received light optical axis, so that the receiver photodetector module receives the reflection beam from the external environment to detect the external environment;
measuring a received light error angle (ρr) occurring in the received light optical axis of the receiver lens module in the three-dimensional coordinate system, after the receiver lens module is bonded to the receiver photodetector module by curing the receiver adhesive;
fixing the projector unit to the sensor base; and
interposing and screw-fastening each of the plurality of primary shims between the first base surface and the first contact surface, and each of the plurality of secondary shims between the second base surface and the second contact surface, wherein the thickness of each of the plurality of primary shims and the thickness of each of the plurality of secondary shims are set based on the adjusted orientation angle that makes the positioning orientation angle (ψ) of the received light virtual axis coincide with the relative error (δp_r) between the orientation angle deviation (δp) of the projected light optical axis relative to the projected light virtual axis and the orientation angle deviation (δr) of the received light optical axis relative to the received light virtual axis in the three-dimensional coordinate system, wherein the orientation angle deviation of the projected light optical axis is defined as a sum of the projected light focusing angle and the projected light error angle, and the orientation angle deviation of the received light optical axis is defined as a sum of the received light focusing angle and the received light error angle.

16. A manufacturing method for manufacturing the optical sensor (10) of claim 6, the manufacturing method comprising:
measuring a received light focusing angle (wr), which is an angle defined by the received light optical axis relative to the received light virtual axis, in a focused state of the reflection beam;
bonding a receiver lens module (42) to a receiver photodetector module (45) via a receiver adhesive (410) in the receiver unit, wherein the receiver lens module is configured to guide the reflection beam, which is received from the external environment, to the receiver photodetector module along the received light optical axis, so that the receiver photodetector module receives the reflection beam from the external environment to detect the external environment;
measuring a received light error angle (ρr) occurring in the received light optical axis of the receiver lens module in the three-dimensional coordinate system, after the receiver lens module is bonded to the receiver photodetector module by curing the receiver adhesive; and
interposing and screw-fastening each of the plurality of primary shims between the first base surface and the first contact surface, and each of the plurality of secondary shims between the second base surface and the second contact surface, wherein the thickness of each of the plurality of primary shims and the thickness of each of the plurality of secondary shims are set based on the adjusted orientation angle that makes the positioning orientation angle (ψ) of the received light virtual axis coincide with the orientation angle deviation (δr) of the received light optical axis relative to the received light virtual axis in the three-dimensional coordinate system, wherein the orientation angle deviation of the received light optical axis is defined as a sum of the received light focusing angle and the received light error angle.

17. A manufacturing method for manufacturing the optical sensor (10) of claim 11, the manufacturing method comprising:
measuring a projected light focusing angle (ωp), which is an angle defined by the projected light optical axis relative to the projected light virtual axis, in a focused state of the projection beam;
bonding a projector lens module (26) to a projector light source module (22) via a projector adhesive (210) in the projector unit, wherein the projector lens module is configured to guide the projection beam, which is projected from the projector light source module, to the external environment along the projected light optical axis;
measuring a projected light error angle (ρp) occurring in the projected light optical axis of the projector lens module in the three-dimensional coordinate system, after the projector lens module is bonded to the projector light source module by curing the projector adhesive;
measuring a received light focusing angle (wr), which is an angle defined by the received light optical axis relative to the received light virtual axis, in a focused state of the reflection beam;
bonding a receiver lens module (42) to a receiver photodetector module (45) via a receiver adhesive (410) in the receiver unit, wherein the receiver lens module is configured to guide the reflection beam, which is received from the external environment, to the receiver photodetector module along the received light optical axis, so that the receiver photodetector module receives the reflection beam from the external environment to detect the external environment;
measuring a received light error angle (ρr) occurring in the received light optical axis of the receiver lens module in the three-dimensional coordinate system, after the receiver lens module is bonded to the receiver photodetector module by curing the receiver adhesive;
fixing the receiver unit to the sensor base; and
interposing and screw-fastening each of the plurality of primary shims between the first base surface and the first contact surface, and each of the plurality of secondary shims between the second base surface and the second contact surface, wherein the thickness of each of the plurality of primary shims and the thickness of each of the plurality of secondary shims are set based on the adjusted orientation angle that makes the positioning orientation angle (ψ) of the projected light virtual axis coincide with the relative error (δr_p) between the orientation angle deviation (δr) of the received light optical axis relative to the received light virtual axis and the orientation angle deviation (δp) of the projected light optical axis relative to the projected light virtual axis in the three-dimensional coordinate system, wherein the orientation angle deviation of the projected light optical axis is defined as a sum of the projected light focusing angle and the projected light error angle, and the orientation angle deviation of the received light optical axis is defined as a sum of the received light focusing angle and the received light error angle.

18. A manufacturing method for manufacturing the optical sensor (10) of claim 12, the manufacturing method comprising:
measuring a projected light focusing angle (ωp), which is an angle defined by the projected light optical axis relative to the projected light virtual axis, in a focused state of the projection beam;
bonding a projector lens module (26) to a projector light source module (22) via a projector adhesive (210) in the projector unit, wherein the projector lens module is configured to guide the projection beam, which is projected from the projector light source module, to the external environment along the projected light optical axis;
measuring a projected light error angle (ρp) occurring in the projected light optical axis of the projector lens module in the three-dimensional coordinate system, after the projector lens module is bonded to the projector light source module by curing the projector adhesive; and
interposing and screw-fastening each of the plurality of primary shims between the first base surface and the first contact surface, and each of the plurality of secondary shims between the second base surface and the second contact surface, wherein the thickness of each of the plurality of primary shims and the thickness of each of the plurality of secondary shims are set based on the adjusted orientation angle that makes the positioning orientation angle (ψ) of the projected light virtual axis coincide with the orientation angle deviation (δp) of the projected light optical axis relative to the projected light virtual axis in the three-dimensional coordinate system, wherein the orientation angle deviation of the projected light optical axis is defined as a sum of the projected light focusing angle and the projected light error angle.
